# EUROPEAN PATENT APPLICATION

(11) **EP 1 914 928 A1**
(43) Date of publication of application: **23.04.2008**
(21) Application number: 06021776.7
(22) Date of filing: 17.10.2006
(51) Int. Cl.: H04L 12/18

(54) **Multicast service registration by mobility management entities**

(71) Applicant: MATSUSHITA ELECTRIC INDUSTRIAL CO., LTD., Osaka 571-8501 (JP)
(72) Inventor: Becker, Ralf, 63225 Langen (DE); Gonsa, Osvaldo, 63225 Langen (DE)
(74) Representative: Grünecker, Kinkeldey, Stockmair & Schwanhäusser Anwaltssozietät

(57) **Abstract**

The invention relates to a method for ensuring service continuity of a multicast service received by a mobile terminal from an access node, wherein the access node is assigned to a first and at least a second pool area simultaneously. Further, the invention relates to the different entities of a communication network, such as a mobile terminal, a mobility management entity, a user plane entity and an access node. To ensure service continuity of the multicast service received by the mobile terminal from an access node being assigned to a first and at least a second pool area simultaneously, it is proposed that the mobility management entity serving the mobile terminal registers at the user plane entity providing the multicast user plane to the access node irrespective of the user plane entity being assigned to the same pool area/tracking area as the mobility management entity.

## Description

### FIELD OF THE INVENTION

The invention relates to a method for ensuring service continuity of a multicast service received by a mobile terminal from an access node, wherein the access node is assigned to a first and at least a second pool area simultaneously. Further, the invention relates to the different entities of a communication network, such as a mobile terminal, a mobility management entity, a user plane entity and an access node.

### TECHNICAL BACKGROUND

For mobile communications systems it is generally required that a mobile terminal first attaches to/registers with the network before being able to receive desired services. This attachment/registration usually comprises authentication and authorization of the mobile terminal in the network and is often referred to as "network attachment". For each mobile terminal attaching/registering with the network context state information and signaling messages are generated at the network entity handling the network attach. So obviously each mobile terminal creates some load at this entity. Of course there is an upper bound for the load a specific network entity can process, resulting in an upper bound regarding the number of mobile terminals such an entity can handle. Therefore, it might be required to spread the load caused by the mobile terminals across several network entities.

Generally mobile communications systems can be split into logically separated parts providing dedicated functionalities. These parts are usually called core network (CN) and access network (AN) with several access nodes. Particularly for wireless mobile communications systems the latter part is usually referred to as radio access network (RAN).

Typically the network entities handling the network attach functionality are located in the core network of the mobile communications system. Entities in the radio access network and core network utilize defined interfaces to communicate between each other. In order to allow a distribution of the load caused by the mobile terminals across several core network entities, each radio access network entity handling the radio connection with the mobile terminal has to have a relation (i.e. interface) to a plurality of core network entities. As there are several radio access network entities deployed in a mobile communications system, this results in a many-to-many relation between the core network entities and the radio access network entities (see for example 3GPP TR 25.912, "Feasibility study for evolved Universal Terrestrial Radio Access (UTRA) and Universal Terrestrial Radio Access Network (UTRAN)", version 7.0.0, available at http://www.3gpp.org and being incorporated herein by reference).

Considering the deployment of a mobile communications system in a large area, e.g. a whole country, it becomes obvious that a many-to-many relation might not exist between all radio access network entities and all core network entities. As transport network connectivity may be regionally restricted, e.g. due to security reasons or due to other network operational reason, only a subset of all radio access network entities might have an interface to a subset of all core network entities. All those entities with an interface between them can be considered as being part of a logic region within the entire mobile communications network, which is typically called pool area. Taking into account network deployment aspects, such a pool area consists of a number of radio access network entities, which are geographically related to one or several core network entities and where an interface exits between each entity of that pool area. Further, considering network deployment aspects it could be the case that different pool areas overlap each other (see for example 3GPP TR R3.018, "Evolved UTRA and UTRAN; Radio Access Architecture and Interfaces", version 0.4.1, available at http://www.3gpp.org and being incorporated herein by reference).

This might be required in order to avoid excessive signaling, which would occur when a mobile terminal is moving along a hard border between different pool areas. In such a case the mobile would frequently switch the association from one to the other pool area due to varying signal strengths received from the respective radio access network entities. Such a switch of association might require some signaling to update context state information maintained in the network. The deployment of overlapping pool areas introduces some kind of hysteresis for this kind of procedure avoiding the need for frequent updating of the context state information.

Another aspect for configuring overlapping pool areas is the possibility to separate the overall load according to different terminal moving pattern, e.g. considering multiple pool areas where each covers a separate residential area and all cover the same city centre (see for example 3GPP TS 23.236, "Intra-domain connection of Radio Access Network (RAN) nodes to multiple Core Network (CN) nodes", version 6.3.0, available at http://www.3gpp.org and being incorporated herein by reference).

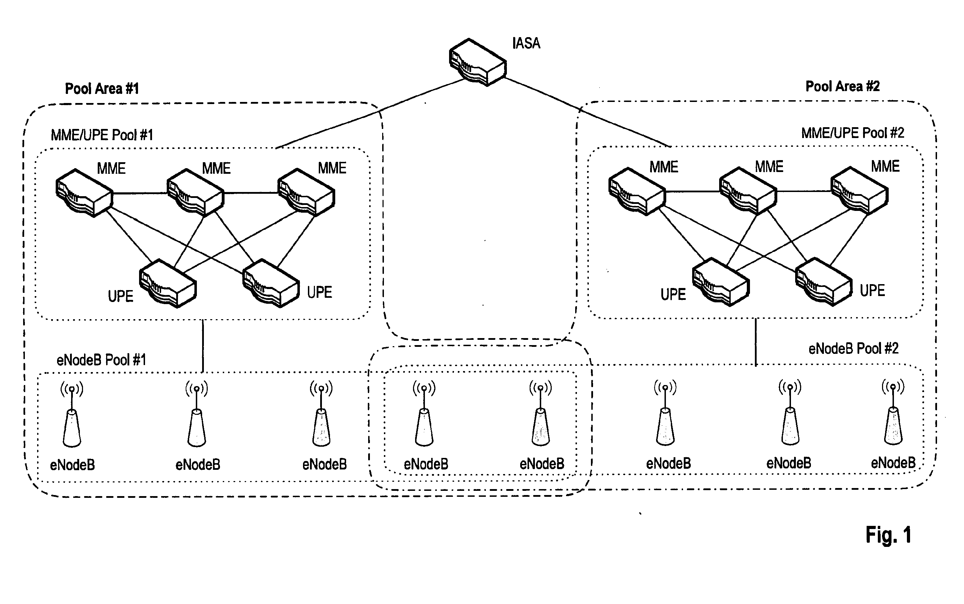

Taking into account above considerations a solution to spread the load caused by the mobile terminals across several core network entities is that on network attach a radio access network node randomly selects one of the core network entities of its pool area (to which it has an interface) and forwards the network attach request to this entity. When considering multiple mobile terminals this might result in the situation that two or more terminals connected to the same radio access network entity (access node) are assigned to different core network entities, which additionally could be part of different pool area in case the radio access network entity is located in an overlapping pool area. Each UE perform network attachment with their assigned core network entity. Eventually the (individually) requested services are delivered from different core network entities (of possibly different pool areas) via the same radio access network entity to the mobile terminals. Fig. 1 exemplifies the concept of overlapping pool areas and the distribution of the mobile terminals across several core network entities.

The invention is *inter alia* related to the provisioning of multicast services in cellular mobile communications networks. Such types of networks are usually designed to support terminal mobility in a highly efficient and secure way (e.g. efficient management of network resources and radio resources, establishment of and use of secure communication channels). In order to realize this, usually a tunnel-based scheme is adopted using protocols like Mobile IP standardized in IETF or GPRS Tunneling Protocol (GTP) as standardized in 3GPP. These kind of tunneling protocols efficiently and securely support point-to-point communications services like Voice over IP (VoIP). However, they usually do not inherently support point-to-multipoint services like multicast or broadcast.

In order to allow efficient support for multicast or broadcast services specific extensions the tunneling protocols and network architectures have to be made. For example the 3GPP Rel-6 Multimedia Broadcast/Multicast Service (MBMS) represents such an extension for the UMTS architecture.

Traditionally (also in 3GPP SAE/LTE systems) the cellular networks are split into a control plane (also denoted C-plane) handling all control information and procedures and a user plane (also denoted U-Plane) handling the actual user data traffic, which also applies for the multicast architecture. The invention assumes that the multicast control plane can be handled by all core network control plane entities, which are assigned to the mobile terminals during network attachment or mobility. With respect to the SAE/LTE system the Mobility Management Entity (MME) performs the core network control plane functionality. For exemplary purposes all MMEs that also contain multicast management functionality may be referred to as a Multicast-MME (M-MME). On the other hand, for the SAE/LTE system the core network user plane functionality is contained in the User Plane Entity (UPE). It is assumed that each UPE also provides user plane functionality for a multicast service and may be referred to as a Multicast-UPE (M-UPE), if it is selected by an M-MME to handle the multicast service data. Further, depending on the pool area size and/or MME(s)/UPE(s) capability, at least one M-UPE per pool area may be selected for a multicast service. From the perspective of a mobile terminal, the M-MME is the same MME as assigned during network attach or mobility. Thereby, it may be possible that the M-UPE serving point-to-multipoint (p-t-m) services is different from the UPE assigned for point-to-point (p-t-p) services. However, for multicast services there is no direct relation between the mobile terminal and the M-UPE, i.e. the terminal does not maintain a user plane bearer to the M-UPE. In fact the multicast service data is delivered from the M-UPE to the access nodes (eNodeBs), which broadcast the data to all mobile terminals present in their respective service area. E.g. IP multicast transport may be utilized in the network between the M-UPE and access nodes for transmission of the multicast service data.

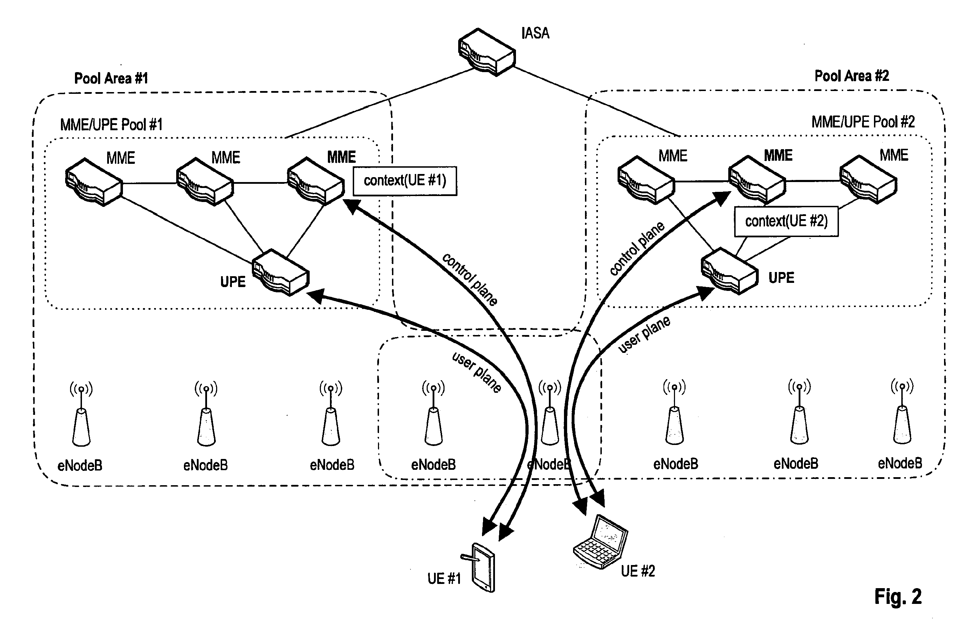

The functional slit in user plane and control plane and an exemplary resulting scenario configuration of user plane and control plane for two mobile terminals that attach to an access node assigned to two pool areas simultaneously is shown in Fig. 2. The two mobile terminals, UE #1 and UE #2 are both attached to the same access node (eNode B) that is located in an overlapping part of pool areas #1 and #2. While UE #1 is assigned to pool area #1 and thus served by core network entities of this pool area, UE #2 is assigned to pool area #1 and thus served by core network entities of pool area #2. Accordingly, the control plane is provided between UE #1 and one of the MMEs in pool area #1, while for UE #2 the control plane is provided between UE #2 and a MME in pool area #2. Similarly, both mobile terminals would receive multicast service data via a user plane established in pool area #1 and pool area #2 respectively.

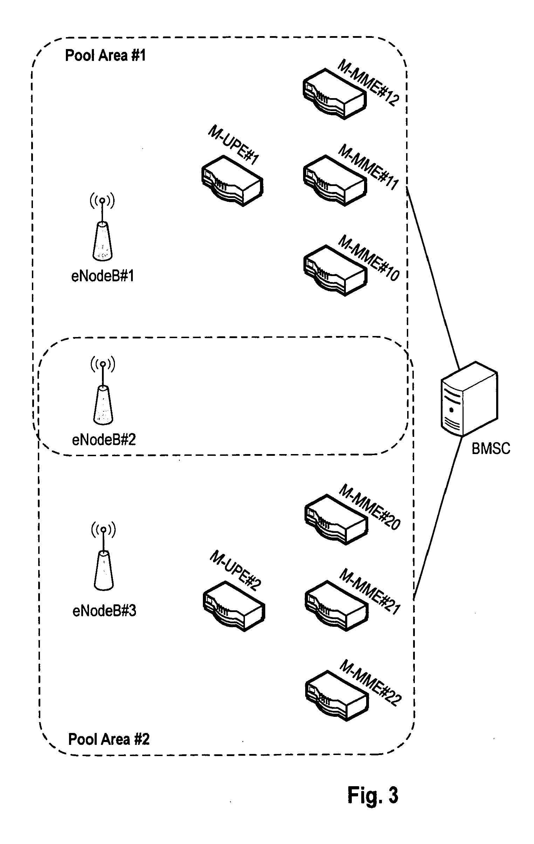

Fig. 3 shows an exemplary multicast architecture for the 3GPP SAE/LTE system taking into account overlapping pool areas based on which potential drawbacks of existing solutions on providing multicast services to users will be outlined. In this exemplary communication system, it may be assumed for exemplary purposes that the two pool areas are provided, pool area #1 and pool area #2.

For simplicity, it is assumed that data of a multicast service is provided via a single user plane entity in a respective pool area. However, it is of course also possible to have more than one user plane entity providing multicast service data to the respective access nodes (here eNodeBs) of a pool area. Hence, one user plane entity M-UPE #1 is provided in pool area #1 and one user plane entity M-UPE #2 is provided in pool area #2. Further, the control plane for the mobile terminals attached to the access nodes of a pool area may be established to several mobility management entities in a respective pool area, i.e. M-MME #10, M-MME #11 and M-MME #12 in pool area #1 and M-MME #20, M-MME #21 and M-MME #22 in pool area #2. For exemplary purposes a BMSC (Broadcast/Multicast Service Center) is shown which could be the source of the multicast service to be provided to mobile terminals in the two pool areas.

Similar to the system shown in Fig. 1, it may be further assumed for exemplary purposes that the core network entities, i.e. the mobility management entities and the user plane entity of a respective pool area are interconnected via interfaces for communication and signaling. Further, the core network entities may also be connected to the different access nodes assigned to each pool area.

In the exemplary embodiment shown in Fig. 3, it is assumed that there are one or more access nodes (eNodeB#1) assigned to only pool area #1, one or more access nodes (eNodeB#2) assigned to pool area #1 and pool area #2 and one or more access nodes (eNodeB#3) assigned to pool area #2.

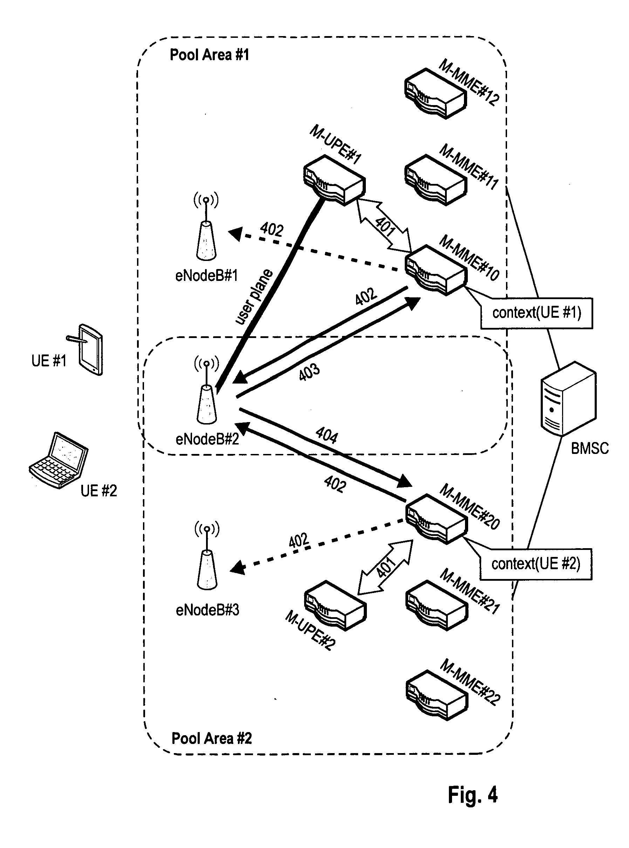

As already discussed two or more mobile terminals connected to the same base station in an overlapping pool area might be assigned to different core network control plane entities, which might additionally belong to different pool areas. Regarding the multicast architecture depicted in Fig. 4 it might therefore happen that UEs connected to the same base station in an overlapping pool area, activate the same multicast service at different M-MMEs located in different pool areas.

Receiving this multicast service activation request from the mobile terminals, each M-MME registers at an M-UPE in its own pool area configuring multicast user plane parameters (including for example a private IP multicast address for distribution of the multicast service data). When triggered by the multicast server (e.g. the BMSC) each M-MME having received a multicast service activation request sends a session start message to all access nodes (base stations / eNodeBs) in its pool area including the multicast user plane configuration so as to trigger the establishment of the user plane in its pool area. This might comprise a multicast service identifier (e.g. TMGI) and the configured private IP multicast address.

Generally, an access node receiving a session start message for a multicast service checks, if there are mobile terminals requiring that service. For mobile terminals in active mode the access node might be able to derive this information from the stored context information of a respective mobile terminal (UE context information). For mobile terminals in idle mode, which are supposed to be unknown to the access nodes, it might trigger some kind of paging procedure, e.g. sometimes also called counting, to gain the required information about mobile terminals interested in the multicast service. The access node would only establish a multicast user plane, when it detects that there are mobile terminals present that require the multicast service. In case there are no such mobile terminals, the access node would reject all session start messages, e.g. using a NACK message with an appropriate cause.

Obviously, in the scenario discussed here, the access node in the overlapping pool area receives multiple session start messages for the same multicast service, which can be identified using the multicast service identifier (e.g. TMGI). The session start messages received from different pool areas contain different user plane configurations (i.e. different IP multicast addresses). The session start messages all refer to the same multicast service (containing the same service data), but the access node needs to receive the service data only once. Therefore, the access node selects one of the provided multicast user plane configurations and informs the respective M-MMEs from which it received the multicast session start messages about its decision, e.g. using ACK and NACK messages respectively. This results in establishment of a multicast user plane only to one of the pool areas avoiding duplicate user planes for the same multicast service, which would represent a waste of network resources.

In the system above a strict separation of control plane and user plane functionality between M-MME and M-UPE has been assumed. However, regarding multicast services another option is that there is a separation of terminal-based and session-based control procedures between M-MME and M-UPE. On the one hand, terminal-based control comprises all procedures that are triggered individual from/for each service participating terminal, e.g. service activation or de-activation procedures. On the other hand, session-based control comprises all procedures that are triggered for the entire service session commonly affecting all terminals, e.g. session start or stop procedures. With respect to above multicast service architecture this would imply that session start/stop messages are rather sent by M-UPEs then M-MMEs. However, also for this variant the same scenario, i.e. reception of multiple session start messages for the same multicast service, exists regarding access nodes in overlapping pool areas. In this case the access node would receive the multiple session start messages from different M-UPEs in different pool areas.

Considering above service scenario, there could be the case that all mobile terminals attached to the pool area to which the multicast user plane was established no longer receive the service in that pool area. For example they might deactivate the service, detach from the network, move to a different pool area or the like. In any case this would result in the removal of their context state information from their attached M-MME. If an M-MME detects that it no longer hosts any terminal for a particular service, e.g. when the last context is removed, it de-registers from the M-UPE. Further, the M-MME also sends a deregistration message to all the access nodes in its pool area which previously established a multicast user plane, i.e. from which it received an ACK message in response to a session start message. Obviously this also comprises the access node in the overlapping pool area. An access node receiving such a deregistration message from a M-MME leaves the private IP multicast transmission, which eventually terminates the multicast user plane to the M-UPE in its pool area. However, as discussed above, regarding the access node in the overlapping pool area there might be terminals present which initially activated the multicast service in different pool areas. So, terminating the user plane to the access node in the overlapping pool area because of terminals attached one pool area, results in loss of the multicast service for the remaining terminals attached to the other pool area.

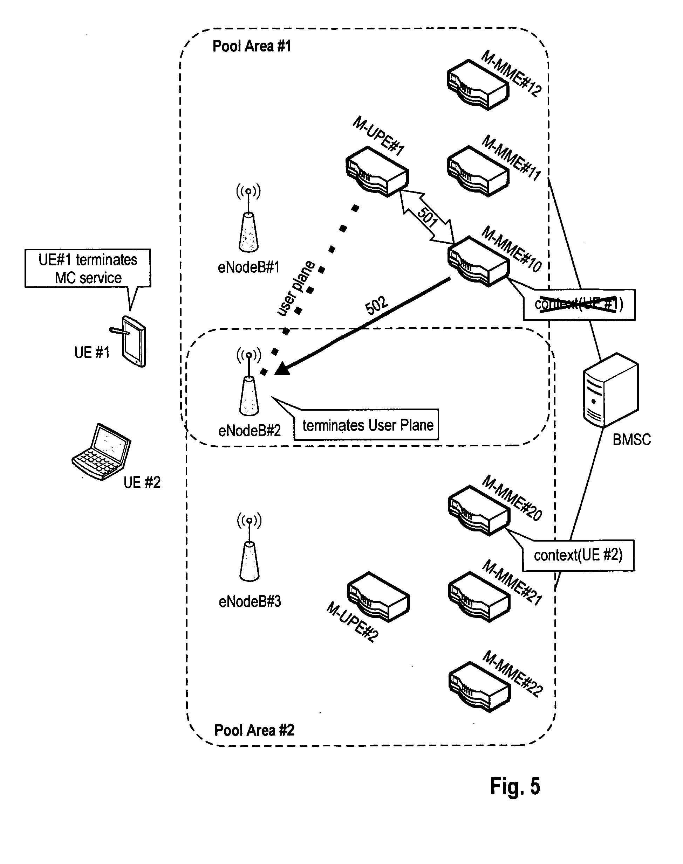

Fig. 5 depicts this situation. In this example the mobile terminal UE #1 attached to pool area #1 no longer receives the multicast service. As this terminal is the last mobile terminal in pool area #1 which activated the multicast service, its serving M-MME #10 de-registers 501 from M-UPE #1 to which the user plane for the multicasts service has been established and sends 502 a deregistration message to the access nodes (eNodeB #1 and eNodeB #2) which established a multicast user plane for the multicast service so as to release the respective user planes. However, when the access node (eNodeB #2) in an overlapping pool area terminates the multicast user plane, the mobile terminals attached to pool area #2, e.g. UE #2 can no longer receive the multicast service.

### SUMMARY OF THE INVENTION

One object of the invention is to enable service continuity of a multicast service received by a mobile terminal in a communication network where access nodes may be assigned to several pool areas simultaneously. Another object of the invention is to improve the management of the user plane in a communication network, where access nodes may be assigned to several pool areas simultaneously.

At least one of these objects is solved by the subject matter of the independent claims. Advantageous embodiments are subject to the dependent claims.

One aspect of the invention is to ensure service continuity of a multicast service received by a mobile terminal. For example, in case an access node may establish a user plane for a multicast service to either one of two pool areas (i.e. is assigned to either one of the pool areas simultaneously), it is proposed that mobility management entity may register for the multicast service at a user plane entity. Thereby, the registration of the mobility management entity is independent of the mobility management entity's actual pool area. Hence, the mobility management entity of a first pool area may register for a multicast service at a user plane entity belonging to another, second pool area, if the user plane for the multicast service is (to be) established to the user plane entity of the second pool area.

Accordingly, the last mobility management entity deregistering from the multicast service at the user plane entity to which the user plane is established will terminate the user plane to the access nodes assigned to two or more pool areas.

According to one embodiment of the invention, a method for ensuring service continuity of a multicast service received by a mobile terminal from an access node is provided. Thereby the access node is assigned to a first and at least a second pool area simultaneously, i.e. is located in an area where two or more pool areas/tracking areas overlap. Further, it may be assumed that the mobile terminal is served by a mobility management entity of the first pool area. According to this embodiment, the mobility management entity of the first pool area may be registered for the multicast service at a user plane entity of the second pool area, if the access node serving the mobile terminal uses a user plane to the user plane entity of the second pool area.

Further embodiments relate to the trigger for such registration by a mobility management entity. For example, in one embodiment, multicast service information on at least the multicast service may be transmitted (e-g- broadcasted) from the access node to at least the mobile terminal served by the mobility management entity of the first pool area. This multicast service information may indicate the pool area of the user plane entity to which the user plane for the multicast service has been established or, alternatively, an identifier of the user plane entity to which the user plane for the multicast service has been established.

Accordingly, in a further embodiment of the invention, the mobility management entity of the first pool area (or tracking area) may register for the multicast service at the user plane entity of the second pool area (or tracking area) in response to receiving a notification from the mobile terminal that the user plane for the multicast service has been established to the user plane entity of the second pool area (or tracking area). This notification may be for example transmitted by the mobile terminal in response to detecting that the user plane entity to which the user plane of the multicast service is established is assigned to a pool area (or tracking area) different to that of the mobility management entity of the first pool area (or tracking area) serving the mobile terminal. This detection could be for example based on the multicast service information received by the mobile terminal from the access node.

Moreover, according to a further embodiment, the notification may be transmitted by the mobile terminal (only) once upon detecting that the user plane entity to which the user plane of the multicast service has been established belongs to a pool area (or tracking area) different to that of the mobility management entity of the first pool area (or tracking area) serving the mobile terminal.

Further, in another embodiment the multicast service information provided by the access node comprise further information. For example, the multicast service information on at least the multicast service may further indicate one or more pool areas (or tracking areas) of mobility management entities having registered for the multicast service at the user plane entity of the pool area (or tracking area) to which the user plane for the multicast service has been established.

In a variation of this embodiment, a notification transmitted by the mobile terminal may indicate to (or trigger) the mobility management entity of the first pool area (or tracking area) to register at the user plane entity of the second pool area (or tracking area). This notification may be sent by the mobile terminal only, if the multicast service information received from the access node does not indicate that a mobility management entity of the first pool area (or tracking area) has registered at the user plane entity of the second pool area (or tracking area).

Other embodiments of the invention relate to the access node's handling and selection of the user plane entity to which the user plane for the multicast service (multicast user plane) should be established. In one embodiment of the invention the access node may decide whether to establish or use a user plane to a user plane entity of the first pool area (or tracking area) or the user plane entity of the second pool area (or tracking area). This decision may for example result in the selection (and use) of the user plane to the user plane entity of the second pool area (or tracking area), if the user plane to the user plane entity of the second pool area (or tracking area) is already established upon receiving a request to establish a user plane for the multicast service from the mobility management entity of the first pool area (or tracking area).

Alternatively, the access node may decide the whether to establish or use the user plane to a user plane entity of the first pool area (or tracking area) or the user plane entity of the second pool area (or tracking area) upon receiving a respective request to establish a user plane for the multicast service from the mobility management entity of the first pool area (or tracking area) and a mobility management entity of the second pool area (or tracking area) serving at least one other mobile terminal requesting the multicast service through the access node. In this case the access node has the freedom to choose any pool area (or tracking area) to which it is associated for establishment of the multicast user plane based on the requests.

Generally, the access node may detect that requests to establish a user plane for a multicast service are related to the same multicast service based on an identifier of a respective multicast service. Similarly, also an established user plane may be detected to be associated to a multicast service by a multicast service identifier.

In one exemplary embodiment, the access node may establish the user plane to the user plane entity of the second pool area (or tracking area) for receiving the multicast service data at the access node and for forwarding same to mobile terminals registered to the multicast service within the service area of the access node.

In a further embodiment also relating to the trigger of a mobility management entity registration at a user plane entity, the mobility management entity of the first pool area (or tracking area) registers itself at the user plane entity of the second pool area (or tracking area) in response to receiving a notification from the access node that the user plane to the user plane entity of the second pool area (or tracking area) is to be used for the multicast service data.

In this exemplary embodiment, the notification may for example include an indication of the user plane entity of the second pool area (or tracking area) or identifies the second pool area (or tracking area). Hence, the mobility management entity may resolve the user plane entity (or rather an identifier thereof) to which the multicast user plane has been established based on the identification of the second pool area (or tracking area) in the notification - if the identifier is not already included in the notification.

In this particular embodiment, the mobile terminal served by the mobility management entity of the first pool area (or tracking area) may be in active mode, and may thus be known to the communication network on the access node level.

Further, in another embodiment, the mobile terminals potentially receiving the multicast service through the access node are in idle mode. In this case the access node may determine whether there is at least one mobile terminal to receive the multicast service in its service area. The access node may transmit the notification to the mobility management entity, if there is at least one at least one mobile terminal to receive the multicast service in its service area.

Another aspect of the invention is the handling of multicast service deregistrations by the mobility management entities. In one exemplary embodiment of the invention a mobility management entity of a first pool area (or tracking area) is assumed to transmit a multicast service deregistration to the user plane entity of a second (other) pool area (or tracking area) to which the multicast user plane of the multicast service has been established. In response to the deregistration the mobility management entity may receive a confirmation message from the user plane entity of the second pool area (or tracking area), wherein the confirmation message indicates whether at least one other mobility management entity has registered for the multicast service at the user plane entity of the second pool area (or tracking area).

In another embodiment a mobility management entity of the second pool area may transmit a multicast service deregistration to the user plane entity of the second pool area and may receive in response to the deregistration a confirmation message at the mobility management entity from the user plane entity of the second pool area, wherein the confirmation message indicates whether at least one other mobility management entity has registered for the multicast service at the user plane entity of the second pool area. If the confirmation message indicates that another mobility management entity of the first pool area but no other mobility management entity of the second pool area is still registered for the multicast service at the user plane entity of the second pool area, the mobility management entity having transmitted the deregistration may transmit a user plane release notification to a respective access node of the second pool area except for those access nodes assigned to the first and second pool area simultaneously.

Moreover, in another embodiment the mobility management entity having transmitted the multicast service deregistration may transmit a user plane release notification to a respective access node of the second pool area, if the confirmation message indicates that no other mobility management entity has registered for the multicast service at the user plane entity of the second pool area.

According to a further embodiment of the invention, a mobility management entity of the first pool area may transmit a multicast service deregistration to the user plane entity of the second pool area. The mobility management entity of the first pool area may receive in response to the deregistration a confirmation message from the user plane entity of the second pool area, wherein the confirmation message indicates whether at least one other mobility management entity has registered for the multicast service at the user plane entity of the second pool area. If no other mobility management entity has registered for the multicast service at the user plane entity of the second pool area, the mobility management entity may transmit a multicast service registration status request to a user plane entity of the first pool area for requesting the user plane entity of the first pool area to indicate whether at least one other mobility management entity has registered for the multicast service at the user plane entity of the first pool area.

If a response from the user plane entity of the first pool received at the mobility management entity of the first pool area in response to the multicast service registration status request indicates that another mobility management entity of the first pool area is still registered for the multicast service at the user plane entity of the first pool area, the mobility management entity having transmitted the deregistration may further transmit a user plane release notification to a respective access node assigned to the first and second pool area simultaneously.

In a variation of the embodiment, the mobility management entity may transmit a user plane release notification to a respective access node of the first pool area, if the response from the user plane entity of the first pool indicates that no other mobility management entity of the first pool area is still registered for the multicast service at the user plane entity of the first pool area.

In one embodiment, the user plane release notification comprises an identifier of the multicast service so as to allow and identification of the multicast service for which the user plane is to be terminated. Accordingly, an access node may release the user plane to the user plane entity of the second pool area (or tracking area) in response to receiving the user plane release notification.

Another embodiment of the invention relates to another possible handling of the multicast service deregistrations. In this exemplary embodiment, a mobility management entity transmit a multicast service deregistration to the user plane entity of a second (other) pool area (or tracking area) to which the multicast user plane of the multicast service has been established. Again, in response to the deregistration the mobility management entity may receive a confirmation message from the user plane entity of the second pool area (or tracking area). In this exemplary embodiment, the confirmation message indicates that one or more mobility management entities of the first pool area (or tracking area) are still registered for the multicast service at the user plane entity of the second pool area (or tracking area). Accordingly, the deregistering mobility management entity may notify those access nodes being assigned to the first and second pool area (or tracking area) simultaneously to release the user plane to the user plane entity of the second pool area (or tracking area) upon having established a new user plane to a user plane entity of the first pool area (or tracking area).

Further, according to another embodiment, the deregistering mobility management entity may indicate to a mobility management entity of the first pool area (or tracking area) to trigger establishment of a user plane for the multicast service between the those access nodes being assigned to the first and second pool area (or tracking area) simultaneously and a user plane entity of the first pool area (or tracking area). Thereby, the multicast user plane may be relocated from the second pool area (or tracking area) to the first pool area (or tracking area) if only (one or more) mobility management entities of the first pool area (tracking area) are still registered at the user plane entity of the second pool area (or tracking area).

In a further enhancement according to another embodiment of the invention deregistration mobility management entity may request one or more mobility management entities of the first pool area (or tracking area) having registered for the multicast service at the user plane entity of the second pool area (or tracking area) to register for the multicast service at the user plane entity of the first pool area (or tracking area).

In another embodiment, the deregistering mobility management entity transmits a user plane release notification to a respective access node of the second pool area (or tracking area) except for access nodes assigned to the first and the second pool area (or tracking area) simultaneously.

Another aspect of the invention according to further embodiments is the handling of registrations in case a mobile terminal is handed over from a source access node not located in an overlapping part of a pool area (or a tracking area) to target access node located in an overlapping part of a pool area (or a tracking area). In this exemplary embodiment, the source access node of a first pool area (or tracking area) may transmit a handover request message to the access node being assigned to the first and second pool area (or tracking area) simultaneously (i.e. the target access node). This handover request message may comprise mobile terminal related context information on a multicast service of the mobile terminal to be handed over from the source access node to the target access node. The target access node receiving the handover request message may determine whether a user plane for the multicast service to the user plane entity of the first or the second pool area (or tracking area) is used based on the context information, and if the user plane for the multicast service to the user plane entity of the second pool area (or tracking area) is used, may trigger the mobility management entity of the first pool area (or tracking area) serving the mobile terminal in handover to register for the multicast service at the user plane entity of the second pool area (or tracking area).

In an alternative embodiment of the invention, a target access node may determine upon handover of the mobile terminal, whether a user plane for the multicast service to the user plane entity of the first or the second pool area (or tracking area) is used. This determination could be for example based on context information comprising information on a multicast service received by the mobile terminal to be handed over to the access node being assigned to the first and second pool area (or tracking area) simultaneously. If the user plane for the multicast service to the user plane entity of the second pool area (or tracking area) is used, the target access node may transmit a handover complete message from the access node to the mobility management entity of the first pool area (or tracking area), wherein the handover complete message triggers the mobility management entity of the first pool area (or tracking area) to register for the multicast service at the user plane entity of the second pool area (or tracking area).

Another embodiment of the invention relates to a mobility management entity of a first pool area (or tracking area) serving a mobile terminal to receive a multicast service. This mobility management entity comprises a a transmitter for registering the mobility management entity for the multicast service at a user plane entity of a second, other pool area (or tracking area), if an access node serving the mobile terminal uses a user plane to the user plane entity of the second pool area (or tracking area).

In a further embodiment, the mobility management entity may comprise a receiver for receiving a notification from the mobile terminal or the access node that the user plane for the multicast service has been established to the user plane entity of the second pool area (or tracking area). The mobility management entity may register for the multicast service at the user plane entity of the second pool area (or tracking area) in response to the reception of the notification. The notification could for example comprise an identifier of the user plane entity of the second pool area (or tracking area) or an indication of the second pool area (or tracking area) so that the mobility management entity receiving the notification knows or may derive at which user plane entity and pool area (tracking area) it should register for the multicast service.

The mobility management entity according to another embodiment further comprises a processing unit for resolving an identifier of the user plane entity of the second pool area (or tracking area) based on the indication of the second pool area (or tracking area).

Another embodiment of the invention relates to a mobility management entity located in a first pool area serving a mobile terminal to receive a multicast service. The mobility management entity may comprise a transmitter for transmitting a multicast service deregistration to a user plane entity of the first pool area, and a receiver for receiving in response to the deregistration a confirmation message from the user plane entity of the first pool area, wherein the confirmation message indicates whether at least one other mobility management entity has registered for the multicast service at the user plane entity of the first pool area.

Further the transmitter of the mobility management entity may be adapted to transmit a user plane release notification to a respective access node of the first pool area except for those access nodes assigned to the first and second pool area simultaneously, if the confirmation message indicates that another mobility management entity of the second pool area but no other mobility management entity of the first pool area is still registered for the multicast service at the user plane entity of the first pool area.

The mobility management entity according to another embodiment may transmit a user plane release notification to a respective access node of the first pool area, if the confirmation message indicates that no other mobility management entity has registered for the multicast service at the user plane entity of the first pool area.

A further embodiment of the invention relates to a mobility management entity located in a first pool area serving a mobile terminal to receive a multicast service. This mobility management entity comprises a transmitter for transmitting a multicast service deregistration to a user plane entity of the second pool area, and a receiver for receiving in response to the deregistration a confirmation message from the user plane entity of the second pool area, wherein the confirmation message indicates whether at least one other mobility management entity has registered for the multicast service at the user plane entity of the second pool area.

The transmitter may transmit a multicast service registration status request to a user plane entity of the first pool area for requesting the user plane entity of the first pool area to indicate whether at least one other mobility management entity has registered for the multicast service at the user plane entity of the first pool area, if no other mobility management entity has registered for the multicast service at the user plane entity of the second pool area. Further, the transmitter may transmit a user plane release notification to a respective access node assigned to the first and second pool area simultaneously, if a response from the user plane entity of the first pool received at the mobility management entity of the first pool area in response to the multicast service registration status request indicates that another mobility management entity of the first pool area is still registered for the multicast service at the user plane entity of the first pool area.

The mobility management entity according to another embodiment, may further transmit a user plane release notification to a respective access node of the first pool area, if the response from the user plane entity of the first pool indicates that no other mobility management entity of the first pool area is still registered for the multicast service at the user plane entity of the first pool area.

In another embodiment, a further mobility management entity serving a mobile terminal to receive a multicast service is provided. In this embodiment, the mobility management entity comprises a transmitter for transmitting a multicast service deregistration to a user plane entity of a first pool area (or tracking area), and a receiver for receiving a confirmation message from the user plane entity of the first pool area (or tracking area) in response to the deregistration, wherein the confirmation message indicates that one or more other mobility management entities of a second pool area (or tracking area) are still registered for the multicast service at the user plane entity of the first pool area (or tracking area). Moreover, the mobility management entity may notify those access nodes being assigned to the first and a second, other pool area (or tracking area) simultaneously to release the user plane to the user plane entity of the first pool area (or tracking area) upon having established a user plane to a user plane entity of the second pool area (or tracking area).

The mobility management entity according to another embodiment may trigger a mobility management entity of the second pool area (or tracking area) to establish a user plane for the multicast service between the those access nodes being assigned to the first and the second pool area (or tracking area) simultaneously and the user plane entity of the second pool area (or tracking area).

Further, the mobility management according may for example also trigger the one or more mobility management entities of the second pool area (or tracking area) having registered for the multicast service at the user plane entity of the first pool area (or tracking area) to register for the multicast service at the user plane entity of the second pool area (or tracking area).

In a further embodiment, the transmitter of the mobility management entity may transmit a user plane a release notification to a respective access node of the first pool area (or tracking area) except for access nodes assigned to the first and the second pool area (or tracking area) simultaneously.

Another embodiment of the invention provides a mobility management entity that may perform or to participate in the steps of the methods and procedures according to any one of the different embodiments outlined herein.

A further embodiment of the invention relates to a mobile terminal for receiving a multicast service through an access node. The mobile terminal may comprise a receiver for receiving from the access node multicast service information on at least the multicast service, wherein the multicast service information indicates a pool area (or tracking area) of a user plane entity to which a user plane for the multicast service has been established or an identifier of a user plane entity to which the user plane for the multicast service has been established. Moreover the mobile terminal may include a transmitter for transmitting a notification to the mobility management entity serving the mobile terminal triggering a registration of the mobility management entity at the user plane entity to which the user plane for the multicast service has been established.

In one embodiment, the transmitter of the mobile terminal may transmit the notification in response to detecting that the user plane entity to which the user plane of the multicast service has been established is assigned to a different pool area (or tracking area) than the mobility management entity serving the mobile terminal. This detection may be for example based on the multicast service information.

The mobile terminal according to another embodiment of the invention, the transmitter may transmit the notification once upon detecting that the user plane entity to which the user plane of the multicast service has been established is assigned to a different pool area (or tracking area) than the mobility management entity serving the mobile terminal.

As already indicated before, in one embodiment of the invention the multicast service information indicates pool areas (or tracking areas) of mobility management entities having registered at the user plane entity of the pool area (or tracking area) to which the user plane for the multicast service has been established. Further, the transmitter of the mobile terminal may for example transmit the notification only, if the multicast service information received by the mobile terminal from the access node does not indicate that a mobility management entity of the first pool area (or tracking area) serving the mobile terminal has registered at a user plane entity of a second pool area (or tracking area).

Another embodiment of the invention provides a mobile terminal that may perform or to participate in the steps of the methods and procedures according to any one of the different embodiments outlined herein.

Further, other embodiments of the invention relate to an access node assigned to a first and a second pool area (or tracking area). In one embodiment, the access node comprises a transmitter for transmitting multicast service information on at least the multicast service to at least one mobile terminal to receive the multicast service, wherein the multicast service information indicates a pool area (or tracking area) of a user plane entity to which a user plane for the multicast service has been established or an identifier of a user plane entity to which the user plane for the multicast service has been established.

As mentioned previously, the multicast service information could for example indicate pool areas (or tracking areas) - i.e. one or more - of mobility management entities having registered at the user plane entity of the pool area (or tracking area) to which the user plane for the multicast service has been established.

The access node according to another embodiment may further comprise a receiver for receiving a notification from a mobility management entity, wherein the notification indicates to the access node that the mobility management entity has registered for the multicast service at the user plane entity to which the user plane for the multicast service has been established. The access node could also include a processing unit for updating the multicast service information in response to the notification.

In another embodiment, the access node comprises a processing unit for deciding whether to establish or use a user plane for the multicast service to a user plane entity of a first pool area (or tracking area) or the user plane entity of the a second pool area (or tracking area). The access node may be for example adapted to detect that requests for establishment of a user plane for a multicast service received by a receiver of the access node are related to the same multicast service based on an identifier of a respective multicast service.

A further embodiment relates to a further access node assigned to a first and a second pool area (or tracking area). This access node may comprise a receiver for receiving a request for establishment of a user plane for a multicast service to the first pool area (or tracking area) from a mobility management entity of the first pool area (or tracking area), and a transmitter for transmitting notification to the mobility management entity of the first pool, to trigger the registration of the mobility management entity of the first pool area (or tracking area) at a user plane entity of the second pool area (or tracking area) to which the user plane for the multicast service has been established.

The notification may for example include an identifier of the user plane entity of the second pool area (or tracking area) or an identification of the second pool area (or tracking area)

Moreover, according to another embodiment the access node may perform or participate in the steps of the methods and procedures according to any one of the different embodiments outlined herein.

Another embodiment relates to a communication system comprising a mobility management entity and/or mobile terminal according and/or an access node according to one of the different embodiments described herein respectively.

Further, other embodiments relate to the provision of computer readable mediums storing instructions that when executed by a processing unit of a mobility management entity, mobile terminal according or an access node, cause the respective entity to perform or participate in the steps of the methods and procedures according to any one of the different embodiments outlined herein.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows an exemplary network architecture where two overlapping pool areas are provided,
- **Fig. 2**: shows the exemplary network architecture of Fig. 1 and further illustrates the establishment of user plane and control plane to respective core network entities of a first and second pool area by two mobile terminal attached to an access node (eNode B) located in the overlapping part of the pool areas,
- **Fig. 3**: shows an exemplary network architecture for the 3GPP SAE/LTE system comprising two overlapping pool areas, and based on which potential problems and solutions according to different embodiments of the invention will be outlined with respect to the other figures,
- **Fig. 4**: shows illustrates the establishment of a single multicast user plane in a 3GPP SAE/LTE system in case a multicast service is requested by mobile terminals attached to an access node (eNode B) located in the overlapping part of the pool areas but being assigned to different pool areas,
- **Fig. 5**: shows illustrates the potential interruption of a multicast service in a 3GPP SAE/LTE system due to the termination of the single multicast user plane in response to a mobile terminal leaving the multicast service,

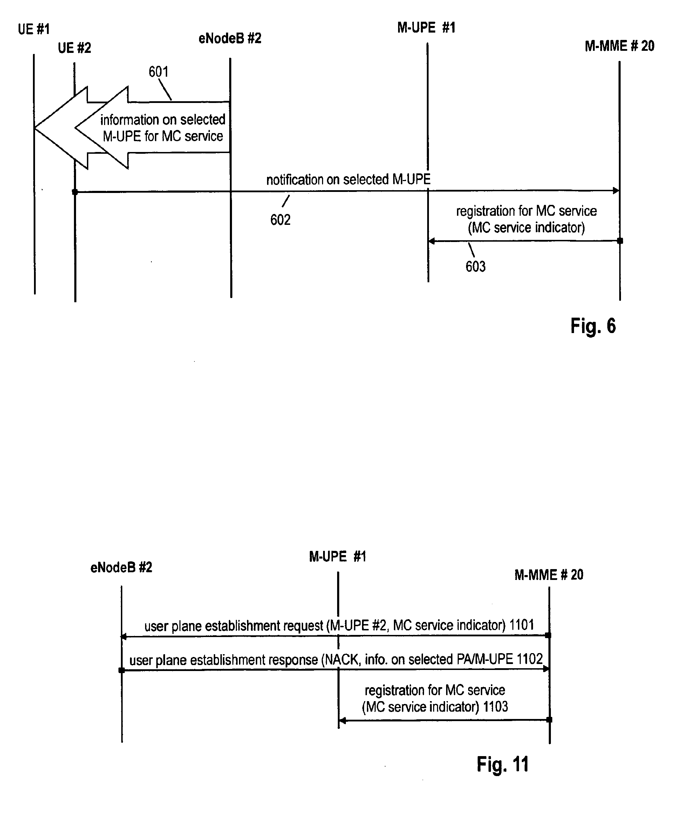

- **Fig. 6**: shows a sequence of exemplary steps in a 3GPP SAE/LTE system for registering a mobility management entity serving a mobile terminal at a user plane entity to which the multicast user plane is established in response to a trigger from the mobile terminal according to an exemplary embodiment of the invention,

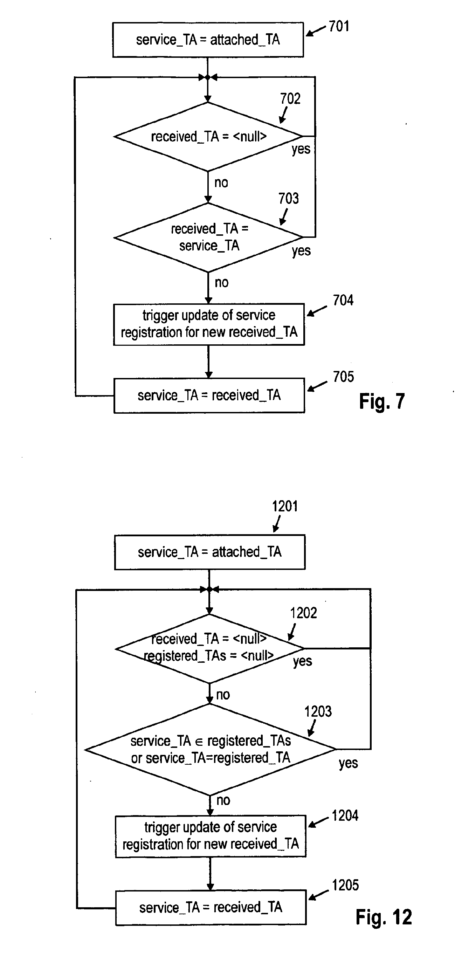

- **Fig. 7**: shows an exemplary flow chart of a procedure in a 3GPP SAE/LTE system performed by a mobile terminal for detecting whether to trigger a registration of its mobility management entity at a user plane entity to which the multicast user plane is established according to an exemplary embodiment of the invention,

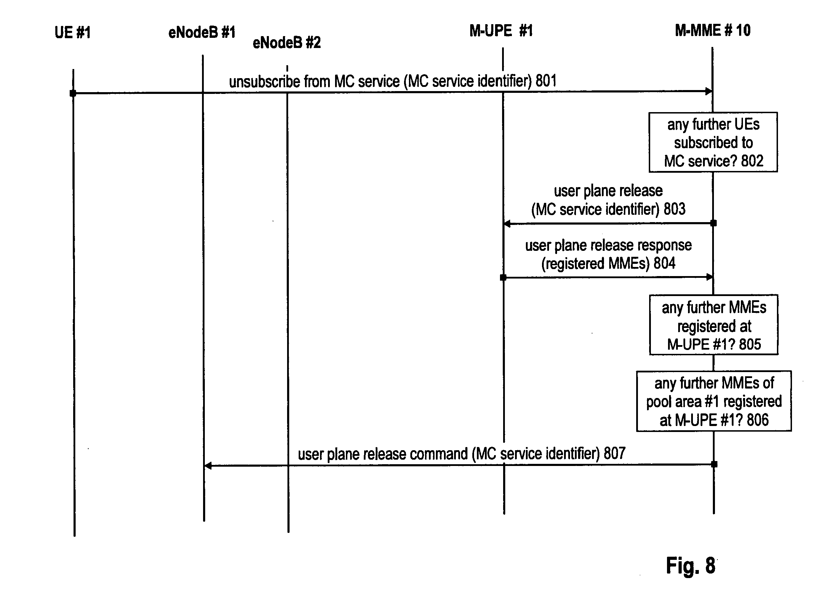

- **Fig. 8**: shows an exemplary procedure in a 3GPP SAE/LTE system for handling multicast service deregistrations from a mobility management entity according to an exemplary embodiment of the invention, where the mobility management entity and the user plane entity to which the multicast user plane is established are located in the same pool area,

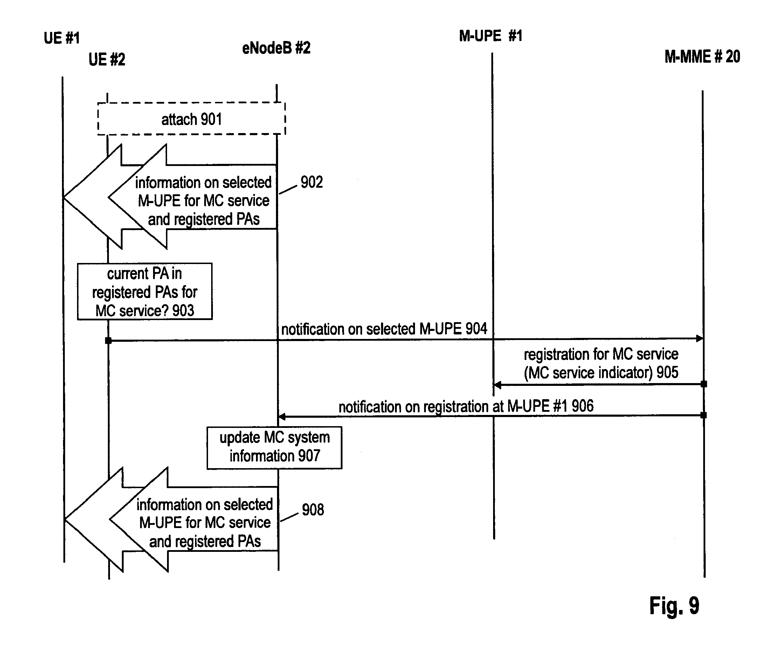

- **Fig. 9**: shows another sequence of exemplary steps in a 3GPP SAE/LTE system for registering a mobility management entity serving a mobile terminal at a user plane entity to which the multicast user plane is established in response to a trigger from the mobile terminal according to an exemplary embodiment of the invention,

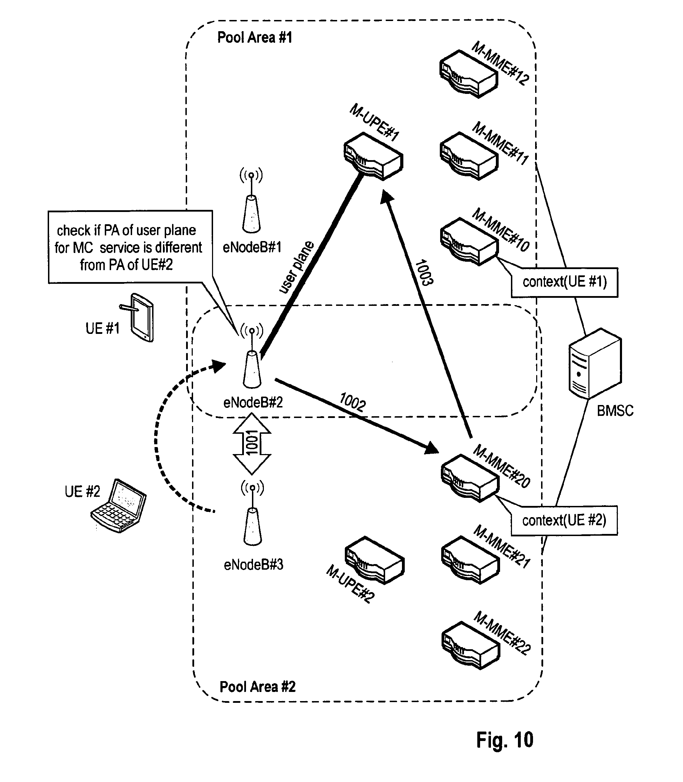

- **Fig. 10**: shows a sequence of exemplary steps in a 3GPP SAE/LTE system for registering a mobility management entity serving a mobile terminal at a user plane entity to which the multicast user plane is established in response to a trigger from an access node to which the mobile terminal is handed over according to an exemplary embodiment of the invention, and

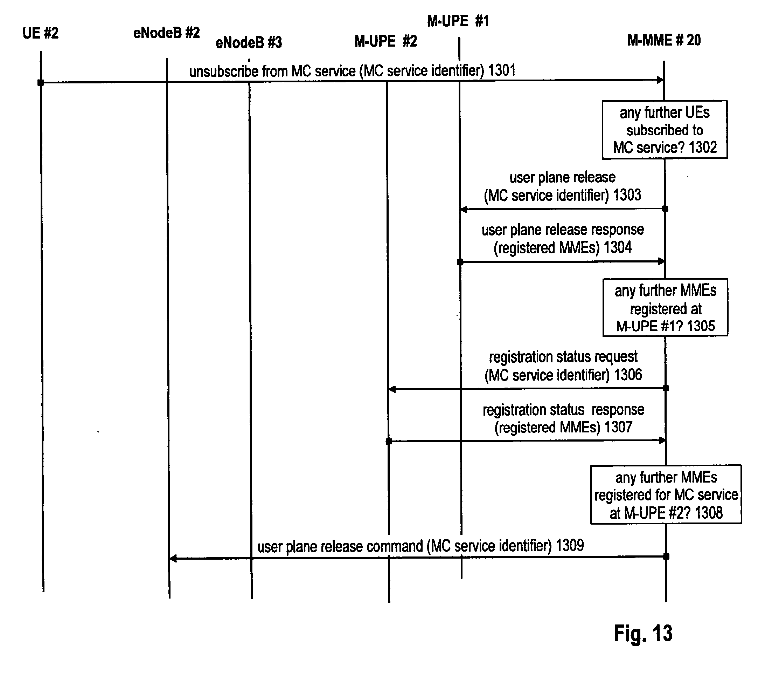

- **Fig. 11**: shows a sequence of exemplary steps in a 3GPP SAE/LTE system for registering a mobility management entity serving a mobile terminal at a user plane entity to which the multicast user plane is established in response to a trigger from an access node according to an exemplary embodiment of the invention,
- **Fig. 12**: shows another exemplary flow chart of a procedure in a 3GPP SAE/LTE system performed by a mobile terminal for detecting whether to trigger a registration of its mobility management entity at a user plane entity to which the multicast user plane is established according to an exemplary embodiment of the invention, and
- **Fig. 13**: shows an exemplary procedure in a 3GPP SAE/LTE system for handling multicast service deregistrations from a mobility management entity according to an exemplary embodiment of the invention, where the mobility management entity and the user plane entity to which the multicast user plane is established are located in different pool areas.

### DETAILED DESCRIPTION OF THE INVENTION

The following paragraphs will describe various embodiments of the invention. For exemplary purposes only, most of the embodiments are outlined in relation to an (evolved) UMTS communication system according to the SAE/LTE discussed in the Background Art section above. It should be noted that the invention may be advantageously used for example in connection with a mobile communication system such as the SAE/LTE communication system previously described, but the invention is not limited to its use in this particular exemplary communication network.

The explanations given in the Technical Background section above are intended to better understand the mostly SAE/LTE specific exemplary embodiments described herein and should not be understood as limiting the invention to the described specific implementations of processes and functions in the mobile communication network. Nevertheless, the improvements proposed herein may be readily applied in the architectures/systems described in the Technological Background section and may in some embodiments of the invention also make use of standard and improved procedures of theses architectures/systems.

One aspect of the invention is to ensure service continuity of a multicast service received by a mobile terminal, especially for cases where at least one access node (for example, a base station, NodeB or eNodeB) is assigned to at least two pool areas. As described in the Technological Background section above such access nodes may establish a user plane for a multicast service to either one of two pool areas. This may for example allow for reducing the traffic overhead due to providing multicast service data for the same multicast service to an access node twice (or in even more copies), since a respective access node could be provided with the multicast service data only once.

The potential problems that could arise from this optimization and which could lead to a loose of service continuity for individual users may result from several factors as outlined in the following. Typically, the mobility management entities and the user plane entities of a specific pool area may not know if a multicast service is also required by mobile terminals attached to another pool area. Due to the concept of overlapping pool areas and the load distribution functionality a mobility management entity and user plane entity might not possess information about all mobile terminals connected to its interfacing access nodes.

The decision of the access node in an overlapping pool area on multicast user plane establishment is further only typically provided to the respective core network entities. Further, the access nodes typically only inform the mobile terminal about general service availability via broadcasted system information. Hence, also the mobile nodes receiving the service do typically not have information on the pool area from which the multicast service is provided.

Moreover, the mobile terminals may select an access point in an overlapping pool area when performing idle mode mobility (e.g. cell reselection) but have no means to inform their serving mobility management entity or user plane entity on their new point of attachment. Further, mobile terminals in idle mode are only known to their mobility management entity on a tracking area level. As the access node in the overlapping area belongs to the current tracking area of the mobile terminal, no location update has to be performed.

To circumvent these potential problems as exemplarily outlined above for a 3GPP SAE/LTE system, it is proposed that the mobility management entities serving users that have registered to a multicast service and that receive the multicast service through an access node being assigned to more than one pool area simultaneously, may register for the multicast service at a user plane entity to which the user plane providing the multicast service data to the access node has been (or is to be) established. Thereby, the registration of the mobility management entity may be independent of the mobility management entity's actual pool area. For example, according to one embodiment of the invention, a mobility management entity of a first pool area may register for a multicast service at a user plane entity belonging to another, second pool area, if the user plane for the multicast service is (to be) established to the user plane entity of the second pool area.

A further aspect of the invention is to inform the mobile terminals about the access nodes' selection of a user plane entity in one of several pool areas to which the access node is assigned. Thereby, also service continuity may be assured for mobile terminal in idle mode (i.e. mobile terminals which have attached to the access node but have not established any signaling connection to the access node). According to this aspect an access node being assigned to two (or more) pool areas simultaneously may transmit information (e.g. via broadcast in the service area of the access node) about the pool area of the selected user plane entity (or alternatively an identifier of the selected user plane entity) in multicast service information. Receiving this information, a mobile terminal can detect whether a multicast service is provided from another pool area than the one to which the mobile terminal is currently attached. In this case, the mobile terminal may for example trigger its mobility management entity to update the service registration, i.e. to register for the multicast service at the user plane entity of the other pool area as described above.

Another aspect of the invention is the handling of the mobility management entity deregistering from the multicast service at the user plane entity to which the user plane for the multicast service has been established. This aspect of the invention takes into account that not only mobility management entities of a single pool area may register at the user plane entity for a multicast service, but that there may be registrations of mobility management entities at the user plane entity belonging to a different pool area than the user plane entity. One concept to tackle this exemplary situation is that the user plane entity indicates to a mobility management entity deregistering from the multicast service, whether other mobility management entities are still registered for the multicast service. If so, it should also be taken into account whether the registered mobility management entity (or entities) belongs to the pool area in which the user plane of the multicast service is established or to another pool area.

In cases where there are further mobility management entities registered, the mobility management entity deregistering from the multicast service should not terminate the user plane within its pool area. In cases where no other mobility management entities for the pool area of the deregistering mobility management entity are any longer registered for the multicast service, but there are one or more other mobility management entities of another pool area registered for the service at the user plane entity, the mobility management entity may terminate the user plane between the user plane entity for the multicast service in its pool area for all user planes to access nodes being exclusively assigned to the pool area of the mobility management entity, but not for access nodes being assigned to at least two pool areas simultaneously.

Accordingly, the last mobility management entity deregistering from the multicast service at the user plane entity to which the user plane is established will terminate the user plane to the access nodes assigned to two or more pool areas.

In one embodiment of the invention the pool area corresponds to a tracking area. A tracking area is typically used to efficiently support terminal mobility in idle mode. In this embodiment the mobility management entities in a pool area are expected to require mapping information between tracking area IDs and cells in this tracking area for a particular geographical area. In other words, a pool area might comprise one or more tracking areas, but a mobility management entity may know which tracking areas belong to its own pool area.

Further, an access node may be considered an entity in the access system of a communications network to which mobile terminals attach. One exemplary embodiment of the invention relates to mobile communication systems, where the access nodes may be base stations or NodeBs (denoted eNodeBs in the 3GPP-based SAE/LTE system). In another embodiment, an access node may also denote an access point of a WLAN system.

A user plane may be understood as an established path between two network entities in a communication system for transmitting data (unidirectional or bidirectional). Typically, the user plane is assigned an identifier that allows a network node to distinguish different user planes. Optionally, there may be context information for a user plane established at the network nodes that include supplementary information on the user plane. In one exemplary embodiment related to a 3GPP based communication system, the user plane is typically established between a base station (or Node B) and a user plane entity. It carries the actual user data of the service requested by the user and is typically associated to some Quality-of-Service (QoS) parameters, e.g. depending on the service or the user subscription. In one exemplary embodiment of the invention it might be based on IP Multicast transport between the access nodes (base stations) and the user plane entity.

Moreover, for a better understanding of the invention the following paragraphs outline the typical procedures and steps for starting and terminating a multicast service in a communication system as also applicable to several embodiments of the invention described herein. Provision of multicast services typically comprises several phases, like subscription and service announcement, joining, session start and data transfer. Also for the termination of multicast services several phases can be identified, like session stop and leaving. From these phases subscription, joining and leaving are typically performed individually per user. The other phases are typically performed on a service basis, i.e. for all users interested in the related service.

The subscription establishes the relationship between the user and the service provider, which allows the user to receive the related multicast service offered by the operator. The service announcement is used to distribute to users information about the service, parameters required for service activation (e.g. IP multicast addresses) and possibly other service related parameters (e.g. service start time).

The joining is part of the service activation phase by which a subscriber joins (becomes a member of) a multicast group, i.e. the user indicates to the network that he/she wants to receive a specific multicast service. The user and/or UE choose the joining time possibly in response to a service announcement. This can be any time before, during or after the actual start of the multicast service. In case the service activation phase happens before the service start, this typically deploys relevant registration information in the network and reserves required resources without actually allocating them.

Finally, session start is the point at which the multicast service data is ready to be sent. As indicated above session start might occur independently of service activation by the users. It is the trigger for resource allocation and establishment in the network, i.e. comprising core network and radio network resources. Subsequently, the multicast service data can be transmitted to the users.

Complementary, session stop in the point at which there will be no more data sent for the multicast service. It triggers release of previously allocated resources in the network. While the leaving is the process by which a subscriber leaves (stops being a member of) a multicast group, i.e. the user no longer wants to receive a specific multicast service.

Similar to the provision of multicast services described above, also several phases can be identified for the provision of broadcast services. Typically, these phases comprise only those performed on a service basis, like service announcement, session start or stop. Phases performed individually per user, like service subscription, joining and leaving, might not be required for broadcast services.

In the following the concepts and ideas of the invention according to different embodiments will be described with respect to a 3GPP based mobile communication system, such as a SAE/LTE system. For an easier understanding the following embodiments will be outlined with reference to a mobile communication system having - for exemplary purposes - a structure as shown in Fig. 3. It should be noted that reference to Fig. 3 is only made for exemplary purposes and that the concepts and ideas described herein are not intended to limit the invention to the exemplary architecture of a communication system as shown in Fig. 3 or to wireless communication systems only. Further, for exemplary purposes it is assumed that the base stations (eNodeBs) form access nodes for the mobile terminals (UEs).

When deploying a base station (denoted also eNodeB), the base station is typically configured with network information that are required for its proper use. This configuration may for example include information about the topological areas to which the base station might belong (e.g. pool area(s)/tracking area(s)) and the network nodes contained in theses areas and to which the base station may maintain an interface. In other words the base station may map a topological area, e.g. tracking area or pool area, to node identifiers, e.g. identifiers of the mobility management entities or user plane entities or other base stations, in this area and vice versa.

Therefore, a base station may know if it is located in an overlapping pool area, i.e. the base station is assigned to two or more pool areas simultaneously. Further, when such a base station receives a session start messages it can determine the originating pool area, e.g. by matching the identifier of the message source with the stored network configuration. In case the base station receives multiple multicast session start messages, it can determine whether these messages belong to the same service by analyzing the service identifier, e.g. TMGI / IP multicast address of the service, contained in each message.

As outlined above a potentially problematic situation for multicast service provisioning to a base station in an overlapping pool area arises, when two or more mobile terminals that are registered to different pool areas receive the same multicast service. This may be particularly problematic in case the mobile terminals are registered to pool areas not providing the multicast user plane and are in idle mode. In one embodiment of the invention, idle state means that the mobile terminals are only known to their respective mobility management entities on a pool area level / tracking area level. As idle mode mobile terminals may also not have a control connection to a base station, the base stations do not have any information about these mobile terminals (such as their location within the network) and it is unknown to which base station in the pool area / tracking area the mobile terminals are attached.

There might be several possibilities how this situation arises. One possibility, already described above, is that mobile terminals connected to the same base station in an overlapping area are attached to different mobility management entities in different pool areas / tracking areas and are activating the same multicast service. When the service is imminent to start the mobility management entities send a multicast session start message the base stations in their pool area to trigger the establishment of a user plane for the multicast service to a respective user plane entity in a respective pool area. The base station in the overlapping pool area receives multiple multicast session start messages and selects one in order to avoid establishment of duplicate multicast user planes for the same service. If now the mobile terminals, attached to the pool area that does not provide the multicast user plane, transit to the idle state, a potentially problematic situation is created as neither the multicast service registration of those mobile terminals is known to the mobility management entities or user plane entity in the pool area that provides the multicast user plane nor can the base station keep track of the attachment status of those mobile terminals, as same are in idle mode.

In another possibility only mobile terminals connected to the base station in the overlapping pool area that are all attached to the same pool area are present. When the service is started, a multicast user plane is established in that particular pool area. If now, due to mobility, an idle mode mobile terminal, which is initially attached to another pool area and which also activated the same multicast service, selects this base station in the overlapping pool area, a potentially problematic situation is created.

According to one exemplary embodiment, service loss in a multicast service may be prevented by allowing the mobility management entity in the pool area hosting the idle mode mobile terminals to register at the user plane entity in the pool area providing the multicast user plane. In order to perform this registration several problems may have to be overcome.

An access node in an overlapping pool area knows to which multicast session start message it initially responded. In other words, the access node is aware to which user plane entity and particularly to which pool area it has established a multicast user plane. However, the access node may typically not trigger the registration procedure, as it may have no knowledge of idle mode mobile terminals within its service area. The mobile terminals in idle mode may only be known to their respective serving mobility management entities. Also a mobility management entity serving an idle mode mobile terminal may potentially not trigger the registration procedure, as it on the one hand does not know to which particular access node an idle mode mobile terminal is listening and on the other hand the mobility management entity may not know to which user plane entity and pool area a access node maintains a multicast user plane.

In idle mode, only the mobile terminal may know to which particular access node it is listening. For exemplary purposes it may be assumed that the mobile terminals in idle mode still receives system information, which is broadcasted by the access node. This system information may also include information on multicast services available in the service area of a respective access node. However, from this multicast service information, a mobile terminal may only derive general availability of a particular multicast service. In order to enable the mobile terminal to trigger the registration procedure, in accordance with an exemplary embodiment of the invention it is proposed to extend this multicast service information provided by the access nodes. In this extended multicast service information, the access node may further transmit tracking area/pool area information of the selected user plane entity or an identifier of the selected user plane entity. Only the access nodes in overlapping parts of two or more pool areas / tracking areas may transmit this extended multicast service information or, alternatively, all access nodes of the pool area / tracking area could transmit the extended multicast service information, for example as part of the system broadcast information.

The access nodes may for example derive the tracking area/pool area information of the selected user plane entity or an identifier of the selected user plane entity from the multicast session start messages. Concerning for exemplary purposes a 3GPP SAE/LTE system the extended multicast service information may be transmitted on the MBMS point-to-multipoint Control Channel (MCCH), which is also received by mobile terminal in idle mode.

Of course a mobile terminal, does not only know to which access node it is listening when being in idle mode. From the context information stored at the mobile terminal, it might also know to which tracking area/pool area it is currently registered. A mobile terminal may generally be supposed to be aware of its current tracking area in systems where the mobile terminals perform a tracking area/pool area update procedure in case it crosses a pool area/tracking area boundary. Therefore, a mobile terminal may constantly compare the broadcasted tracking area/pool area information to the stored tracking area/pool area and in case of difference triggers a location update procedure.

According to another exemplary embodiment of the invention a similar approach may be employed for the update of service registration for multicast services. This approach will be outlined with respect to Fig. 6 in the following. A mobile terminal that previously activated a multicast service may receive 601 the multicast service information from the access node (eNodeB #2) to which it is currently attached. From this information the mobile terminal may derive the information of the tracking area/pool area that provides the multicast user plane. Comparing the received information of the multicast user plane to the stored context information, the mobile terminal can detect whether the multicast service is provided from a different tracking area/pool area. In such a case it triggers 602 an update of the service registration at its mobility management entity, e.g. by sending a notification informing its mobility management entity (M-MME #20) on the selected pool area (Pool Area #1) providing the user plane for the multicast service or alternatively the identifier of the user plane entity (M-UPE #1) providing the user plane for the multicast service.

In an exemplary embodiment related to a 3GPP SAE/LTE system this notification could be represented as a Non-Access Stratum (NAS) message exchanged between the mobile terminal (UE #2) and the current attached mobility management entity (M-MME #20).

Receiving this notifcication (or trigger message) from a mobile terminal (UE #2), the mobility management entity (M-MME #20) may register 603 at the user plane entity (M-UPE #1) in different tracking area/pool area (Pool Area #1). The tracking area/pool area and the respective user plane entity to contact may for example be derived from the content of the notification from the mobile terminal (UE #2).

The user plane entity (M-UPE #1) may store information about all mobility management entities that have registered for a particular multicast service. This stored information could for example comprise mobility management entity identities and tracking area/pool area information. Alternatively, the user plane entity (M-UPE #1) could maintain a counter indicating the number of registered mobility management entities. The registration procedure may for example utilize a direct interface between mobility management entity M-MME #20 of pool area #2 and user plane entity M-UPE #1 of pool area #1 or may be realized via the mobility management entity M-MME #10 in the pool area #1 of the user plane entity providing the multicast user plane.

Further, Fig. 7 exemplifies the procedure performed at the mobile terminals in order to detect when to trigger an update of the service registration according to one exemplary embodiment of the invention. For exemplary purposes it is assumed in this embodiment that a tracking area corresponds to a pool area. The procedure may be applicable to mobile terminals in both, idle mode and active mode.

Service_TA denotes the tracking area/pool area from which service provisioning is expected. Initially this Service_TA is set 701 to the currently attached tracking area/pool area (attached_TA). The mobile terminal may continuously determine 702 whether it has received multicast service information from the access node to which it is attached. The received_TA, may be decoded from the broadcasted multicast service information and indicates the tracking area / pool area to which the transmitting access node has established the user plane for the multicast service. Comparing 703 both parameters, received_TA and service_TA, the mobile terminal can detect if the multicast service is provided by a different tracking area/pool area. In the latter case, an update of the service registration is triggered 704 by the mobile terminal at its mobility management entity in the pool area to which the mobile terminal is attached and the parameter service_TA may be set 705 to the received_TA. Generally, the multicast service provisioning is expected from currently attached tracking area / pool area of the mobile terminal. If the mobile terminal detects that this is not the case, the procedure applies. The procedure may continue during the entire multicast service reception and may be re-initiated after each handover to another administrative area including a location update procedure.

During an ongoing multicast service a mobile terminal that receives the service may be removed from its attached mobility management entity. There are several reasons for this. For example, the mobile terminal stops receiving the multicast service. In this case it typically deactivates the multicast service at the mobility management entity. Another example, may be that the mobile terminal moves to another administrative area (pool area), which implies the transfer of mobile terminal control to another mobility management entity. A further reason might be that the mobile terminal moves out of coverage, runs out of battery or other failure situations occur, which makes the terminal disappear from the network. In any such case, the service context information or even the complete mobile terminal context information (comprising the multicast service context information) is typically removed from the mobility management entity.

Using the individual mobile terminal context information, the mobility management entity may build service context information comprising at least the number of mobile terminals that activated a particular service. Regarding a multicast service a mobility management entity can derive whether it hosts mobile terminals requiring the service. In case it no longer hosts any mobile terminals for a multicast service, the mobility management entity may deregister from the user plane entity to which it previously sent a registration in order to serve the multicast service.

Usually, when the mobility management entity receives an acknowledgement of its deregistration from the user plane entity, it would send a user plane release message (or deregistration message) to all access nodes in its pool area which previously established a multicast user plane to the user plane entity. As explained above, these are the access nodes from which the mobility management entity received an ACK message in response to a session start message.

According to an exemplary embodiment of the invention the user plane entity indicates in its response to a service deregistration from a mobility management entity whether there are other mobility management entities registered for the particular service. The user plane entity may for example derive this information from stored information about the registered mobility management entities as explained above.

The response may for example indicate whether there are further mobility management entities registered for the multicast service at the user plane entity. In case the user plane entity indicates that there are no other mobility management entities registered, the deregistering mobility management entity may send a user plane release message to all access nodes in its service area, as there are no more terminals to receive the service so that all user planes may be terminated and the access nodes may stop multicasting the service. Even in case the deregistering mobility management entity is located in a different pool area / tracking area than the user plane entity, no further registered mobility management entity at the user plane entity means that also all other mobility management entities in the pool area / tracking area of the deregistering mobility management entity have already deregistered from the user plane entity (if there were any registrations at all).

Otherwise, if there are further mobility management entities registered for the multicast service at the user plane entity, the user plane entity may additionally include information in the response message that indicate to the deregistering mobility management entity, whether there is one or more of the registered mobility management entities located in the same pool area as the deregistering mobility management entity or not.

If one or more of the registered mobility management entities is located in the same pool area as the deregistering mobility management entity this means that there are other terminals attached receiving the multicast service attached to at least one mobility management entity of the same pool area as the deregistering mobility management entity. This, the deregistering mobility management entity refrains from sending a user plane release notification to the access nodes in its pool area / tracking area.

If no further registered mobility management entity is located in the same pool area as the deregistering mobility management entity this means that no more terminals in the current pool area are receiving the multicast service, but there are potentially further mobile terminals attached to another pool area that are receiving the multicast service. Hence, the deregistering mobility management entity sends a user plane release notification to those access nodes within its pool are that are in the non-overlapping part of the pool area / tracking area, i.e. to those access nodes that are only assigned to the deregistering mobility management entity's pool area.

Thus, the multicast user plane to the user plane entity from an access node in an overlapping pool area is only terminated if no mobile terminal is attached to a mobility management entity in a pool area to which at least one access node of the user plane entity's pool area is simultaneously assigned and service continuity for the remaining mobile terminal(s) receiving the service from the access node but being attached to another pool area may be achieved.

Fig. 8 exemplifies the described procedure taking into account two overlapping pool areas where a deregistering mobility management entity and the user plane entity to which the multicast user plane is established belong to the same pool area (or tracking area). For exemplary purposes it is assumed that a mobile terminal UE #1 attached to pool area #1 unsubscribes 801 from the multicast service at its mobility management entity M-MME #10. The mobility management entity M-MME #10 determines in response to this unsubscription, whether any further mobile terminals have subscribed to the multicast service at the mobility management entity M-MME #10. This could be for example realized by checking context information of the different mobile terminals served by the mobility management entity M-MME #10 for subscriptions to the multicast service based on the multicast service identifier indicated by the mobile terminal UE #1. If there are no further mobile terminals subscribed to the service, the mobility management entity M-MME #10 sends 803 a deregistration message to the user plane entity M-UPE #1.

The user plane entity M-UPE #1 determines whether there are further mobility management entities registered for the multicast service based on stored information on the registrations. The user plane entity M-UPE #1 returns 804 a deregistration response (confirmation) indicating whether there are further mobility management entities registered to the service and if so, whether there is at least one mobility management entity of pool area #1 registered for the multicast service.

Based on the deregistration response (confirmation) from the user plane entity M-UPE #1, the mobility management entity M-MME #10 determines 805 next, whether there are further mobility management entities registered at the user plane entity M-UPE #1 for the service. If not the mobility management entity M-MME #10 may send a user plane release message to all access nodes of pool area #1.

If there are further mobility management entities registered at the user plane entity M-UPE #1 for the service the mobility management entity M-MME #10 may further determine 806 (based on the deregistration response) whether there is a mobility management entity of pool area #1 registered at the user plane entity M-UPE #1. If so, the mobility management entity M-MME #10 refrains from sending any user plane release notifications. Otherwise, if no more mobility management entities of pool area #1 are registered at the user plane entity M-UPE #1, the mobility management entity M-MME #10 sends 807 a user plane release command including an identification of the multicast service to all access nodes in pool area #1 exclusively assigned to pool area #1 (i.e. eNodeB #1) so that the user plane is only terminated at those access nodes.

Fig. 13 exemplifies the described procedure taking into account two overlapping pool areas where a deregistering mobility management entity and the user plane entity to which the multicast user plane is established belong to different pool areas (or tracking areas). For exemplary purposes it is assumed that a mobile terminal UE #2 attached to pool area #2 unsubscribes 1301 from the multicast service at its mobility management entity M-MME #20. The mobility management entity M-MME #20 determines in response to this unsubscription, whether any further mobile terminals have subscribed to the multicast service at the mobility management entity M-MME #20. This could be for example realized by checking context information of the different mobile terminals served by the mobility management entity M-MME #20 for subscriptions to the multicast service based on the multicast service identifier indicated by the mobile terminal UE #2. If there are no further mobile terminals subscribed to the service, the mobility management entity M-MME #20 sends 1303 a deregistration message to the user plane entity M-UPE #1.

The user plane entity M-UPE #1 determines whether there are further mobility management entities registered for the multicast service based on stored information on the registrations. The user plane entity M-UPE #1 returns 1304 a deregistration response (confirmation) indicating whether there are further mobility management entities registered to the service and if so, whether there is at least one mobility management entity of pool area #1 registered for the multicast service.

Based on the deregistration response (confirmation) from the user plane entity M-UPE #1, the mobility management entity M-MME #20 determines 1305 next, whether there are further mobility management entities registered at the user plane entity M-UPE #1 for the multicast service.

If not, the mobility management entity M-MME #20 may send 1306 a deregistration message (registration status request) for the multicast service to the user plane entity M-UPE #2. On the one hand the message may deregister the mobility management entity M-MME #20 from the multicast service at the user plane entity M-UPE #2. Further, the deregistration message (registration status request) may simultaneously request the user plane entity M-UPE #2 to indicate to the mobility management entity M-MME #20 whether there are further mobility management entities registered for the service at user plane entity M-UPE #2.

The user plane entity M-UPE #2 determines whether there are further mobility management entities registered for the multicast service - e.g. based on stored information on the registrations. The user plane entity M-UPE #2 returns 1307 a deregistration response (registration status response) indicating whether there are further mobility management entities registered to the multicast service indicated in the deregistration message (registration status request).

Based on the deregistration response (registration status response) from the user plane entity M-UPE #2, the mobility management entity M-MME #20 determines 1308 next, whether there are further mobility management entities registered at the user plane entity M-UPE #2 for the service.

If so, the mobility management entity M-MME #20 may send a user plane release message to all access nodes assigned to pool area #1 and pool area #2 simultaneously, but not those exclusively assigned to pool area #2. If not, the mobility management entity M-MME #20 may send a user plane release message to all access nodes of pool area #2 also including those simultaneously assigned to pool area #1 and pool area #2. The access nodes receiving the user plane release message may then terminate the user plane for the multicast service.

Another embodiment pertains to a situation where all mobility management entities in a pool area of the user plane entity to which the multicast user plane has been established have deregistered from the user plane entity. In this embodiment, it may be assumed that a service deregistration for the multicast service is received at a user plane entity from a mobility management entity located in the same pool area / tracking area. As before the user plane entity may indicate in the response whether there are further mobility management entities registered for the multicast service and whether at least one of the remaining registered mobility management entities is located in the same pool area / tracking area as the deregistering mobility management entity.

If there is no further mobility management entity in the pool area of the user plane entity registered for the multicast service, it may be advantageous to decide to relocate the multicast user plane to a pool area / tracking area of which a mobility management entity is still registered for the service. Accordingly, the deregistering mobility management entity may send a user plane release notification to the access nodes being assigned to several pool areas / tracking areas to indicate to the access nodes that the user plane to the current serving user plane entity should be terminated upon having established a new user plane to another mobility management entity of another pool area / tracking area. Further, the deregistration response may also indicate the pool area / tracking area (or even an identifier of a mobility management entity or identifiers of mobility management entities therein) of which mobility management entities are still registered to the multicast service at the user plane entity.

The deregistering mobility management entity may determine an identifier of one of a mobility management entity located in one of the indicated pool area(s) / tracking area(s), and may request this mobility management entity to trigger the establishment of a respective user plane between each access node in an overlapping part of the pool area / tracking area (i.e. assigned the pool area / tracking area of the deregistering mobility management entity and the pool area / tracking area of the requested mobility management entity) and a user plane entity of the pool area / tracking area of the mobility management entity receiving the request.

Obviously the potential problem of service interruption does not exist for non-overlapping pool areas or access nodes in parts of a pool area not overlapping with another one,. For these access nodes no specific means have to be applied, i.e. an access node of a non-overlapping pool area or an non-overlapping part of a pool area is generally not required to transmit extended system information for multicast services. However, according to one exemplary embodiment, also access nodes in non-overlapping areas may broadcast extended system information as already indicated above. However, in this case the information on tracking area/pool area of the selected user plane entity would never differ from the current tracking area/pool area of the mobile terminal.

In case the access node in non-overlapping areas don't broadcast extended system information, the mobile terminals could interpret the lack of this information as being in a part of the pool area that is not overlapping with another one. Hence, they know that there is no problem with service continuity requiring any action from the mobile terminal.

Taking into account above considerations obviously a mixed operation of overlapping and non-overlapping pool areas may be supported. For example, a mobile terminal entering an overlapping part of the pool area might detect that the multicast user plane is provided from a different pool area and trigger appropriate action. If due to mobility the mobile terminal moves back into a non-overlapping part of its current pool area, no additional action is required, as here the multicast user plane is provided from the mobile terminal's current pool area. If due to mobility the mobile terminal moves to a non-overlapping part of another pool area (than its current pool area), a normal handover procedure may take place. Eventually, the mobile terminal will be attached to the other pool area and in its current location the multicast user plane will always be provided by that.

Some embodiments described above have been based on signaling from the mobile terminal to the respective core network entities. However, this signaling exchange may require an active communication connection between the mobile terminal and the radio network, in order to transport the signaling messages from the mobile terminal to the respective core network entities (i.e. mobility management entity). For mobile terminals in active mode this communication connection might be present. However, for mobile terminals in idle mode it may not be present and may need to be established in the first place. The required procedures consume mobile terminal resources (e.g. battery) as well as radio resources (e.g. for the RRC signaling).

According to a further embodiment of the invention each mobile terminal in an overlapping pool area detecting that the multicast user plane is provided from a different tracking area/pool area than it is currently attached, may trigger the update of service registration at its mobility management entity. However, for a particular mobility management entity this registration at a user plane entity of another pool area is only required once, e.g. when triggered the first time, as no per-mobile terminal registration at the user plane entity is provided. Subsequent trigger messages would be ignored, but still consume scarce resources as described above.

In order to overcome this drawback another embodiment of the invention proposes an enhanced procedure improving the resource utilization. As mentioned above the transmission of the signaling message (see e.g. Fig. 6, notification in step 602) from a mobile terminal to a mobility management entity triggering the update of the service registration requires an active communication connection between the mobile terminal and the radio network, e.g. access node. Therefore, the mobility management entity receiving the trigger message may determine to which access node the mobile terminal is connected. In other words the mobility management entity knows which access node provides the multicast service but established a multicast user plane to a different pool area.

In case at least one mobile terminal triggered an update of service registration from a particular access node, the mobility management entity may inform the access node after successful registration at the user plane entity in the different pool area. The access node may include this information in the broadcasted system information for the multicast service. Thus the extended multicast service information broadcast by the access node may be used to inform the mobile terminals about the tracking area/pool area providing the multicast user plane and additionally which other tracking area/pool area have registered at the service providing tracking area/pool area. Therefore, other mobile terminals may detect even in idle mode that service registration is already updated and do not need to send an additional trigger message, resulting in saved mobile terminal and radio resource.

According to the exemplary embodiment shown in Fig. 9, a mobile terminal UE #2 attaches 901 to pool Area #2 via access node (eNodeB #2) assigned to pool area #1 and pool area #2 and receives 902 system information including information on multicast services provided by the access node. The multicast service information of a respective provided service in the service area of access node eNodeB #2 may include the information on the tracking area/pool area providing the multicast user plane and additionally which other tracking area/pool area have registered at the service providing tracking area/pool area. Based on this information on the multicast service the mobile node may decide 903 whether a service registration update is required, for example by utilizing the method illustrated in Fig. 12.

Fig. 12 shows a procedure performed at the mobile terminals in order to detect when to trigger an update of the service registration according to one exemplary embodiment of the invention. As for Fig. 7 it may be assumed for exemplary purposes that a tracking area corresponds to a pool area. The procedure may be applicable to mobile terminals in both, idle mode and active mode.

The parameter service_TA again denotes the tracking area/pool area from which service provisioning is expected. Initially this service_TA is set 1201 to the currently attached tracking area/pool area (attached_TA). The mobile terminal may continuously determine 1202 whether it has received multicast service information from the access node to which it is attached. The received_TA as well as the registered_TAs may be decoded from the broadcasted multicast service information. The received_TA may indicate the tracking area / pool area to which the transmitting access node has established the user plane for the multicast service. Further, the registered_TAs may indicate the tracking areas of which mobility management entities have registered at the user plane entity in the tracking area / pool area to which the transmitting access node has established the user plane for the multicast service. By determining 1203 whether service_TA is either equivalent to received_TA or is contained in registered_TAs, the mobile terminal may detect if a service registration update is required or not. If the service_TA may be matched to one of the received parameters no update is necessary. Otherwise the mobile terminal may trigger 1204 an update of the service registration at its mobility management entity and the parameter service_TA may be set 1205 to the received_TA. Generally, the multicast service provisioning is expected from currently attached tracking area / pool area of the mobile terminal. If the mobile terminal detects that this is not the case, the procedure applies. The procedure may continue during the entire multicast service reception and may be re-initiated after each handover to another administrative area including a location update procedure.

Returning to Fig. 9, the mobile terminal may trigger 904 an update of service registration at its mobility management entity M-MME #20 depending on the evaluation in step 903. The mobility management entity M-MME #20 may send 905 a registration to the user plane entity M-UPE #1 in response to the notification from the mobile terminal UE #2. The notification in step 904 may indicate the multicast service (multicast service identifier) for which a registration is required an may further either indicate the pool area to which the multicast user plane for the multicast service has been established, or an identifier (e.g. IP address) of the user plane entity M-UPE #1. If the pool area is indicated mobility management entity M-MME #20 may resolve the identifier of the user plane entity M-UPE #1 therefrom. After successful registration at the user plane entity M-UPE #1 in pool area #1, the mobility management entity M-MME #20 in pool area #2 may inform 906 the access node eNodeB #2 on the registration. This access node may update 907 the multicast service information (e.g. service provided by pool area #1, pool area #2 registered at pool area #1) and may include the updated information in the broadcasted system information. Subsequent mobile terminals reading 908 the updated system information can derive that an update of service registration already took place and would not send an additional trigger message.

Some of the embodiments described herein particularly focus on mobile terminals in idle mode. Of course also mobile terminals in active mode might hand over to an access node in an overlapping pool area during an ongoing multicast service. In case the multicast user plane is provided from another pool area than the mobile terminal is attached to, a similar situation occurs as already described above.

In contrast to mobile terminals in idle mode, mobile terminals in active mode may be typically known to the access node because they maintain an active communication connection to the network. This knowledge on the mobile terminal may also comprise information about the mobile terminals current pool area, which may be for example stored in mobile terminal context information at the access node. For example, in a cellular environment the radio network typically controls the handover for mobile terminals in active mode. In this case the access node to which the mobile terminal is currently connected is called the source node and the access node to which the mobile terminal should handover is called the target access node.

According to another embodiment of the invention, after the handover is performed, the target access node may send a notification, e.g. HO Complete message, to the respective mobility-handling core network entity, e.g. mobility management entity, in order to inform same about the new location of the mobile terminal. Using the stored context information on the mobile terminal, the target access node may detect if the pool area providing the multicast service is different to the pool area of the mobile terminal. In this case, the target access node could add information on the selected user plane entity for the multicast service and the user plane entity's tracking area/pool area in the HO Complete message to the mobility management entity. This additional information may trigger the mobility management entity to update the service registration at the user plane entity in the different pool area.

Before the actual handover is performed, i.e. that the mobile terminal connects to the target access node, there may also be some information exchanged between the source and the target nodes, e.g. HO Request message. This information may also comprise information about the currently requested (multicast) service(s) in order to allow the target access node to assess, if the service(s) could be further provided in the service area of the target access node. The target access node knows which multicast services are provided in its service area and the respective user plane configuration of the services. Therefore, it is already possible at reception of the HO Request to determine at the target access node whether a trigger for the update of service registration at the mobility management entity for a multicast service indicated to be received by the mobile terminal in handover is required or not.

In any case, the required message triggering the update of service registration at the mobility management entity can be integrated with the signaling messages required for active mode mobility. Therefore, in combination with the solution and enhancement described above, it might not be required for idle mode mobile terminals to trigger the procedure, resulting in better utilization of mobile terminal and network resources.

Fig. 10 shows the triggering of a multicast service registration by a target access node upon handover of a mobile terminal according to an exemplary embodiment of the invention. In this example the mobile terminal UE #2 attached to pool area #2 is considered to be in active mode, when handing over from the source access node eNodeB #3 to the target access node eNodeB #2 in the overlapping pool area. As described before in the signaling 1001 between source access node and target access node during the handover procedure the source access node provides the target access node with service information on the service(s) of the mobile terminal UE #2, e.g. as part of a transfer of UE context information. This service information also identifies the multicast service received by the mobile terminal and on the user plane configuration thereof (including the pool area of the user plane). The target access node may check its context information on the multicast service, for example including the multicast user plane configuration of the multicast service in the service area of the target access node. If the user plane configuration in the target access node's context and the user plane configuration received for the multicast service from the source access node do not match, the target access node may trigger 1002 an update of the service registration at mobility management entity M-MME #20 of pool area #2. Alternatively, the target access node may compare the current pool area of the mobile terminal which might be indicated in the transferred UE context information to the pool area providing the multicast service which might be derived from stored context information on the multicast service. If the current pool area of the mobile terminals does not match the pool area providing the multicast service, the target access node may trigger 1002 an update of the service registration at mobility management entity M-MME #20 of pool area #2.

According to the notification the mobility management entity M-MME #20 may register 1003 for the multicast service at user plane entity M-UPE #1 of pool area #1, after having resolved an identifier of the user plane entity M-UPE #1 from the pool area information contained in the notification or based on the identifier of the user plane entity M-UPE #1 contained in the notification (step 1002) from the target access node.

Most embodiments described above relate to an ongoing multicast service. In other words the procedures might take place when the service is already started. However, in some situations it might be possible to update the service registration already during the service start phase. This might be the case when multiple mobile terminals are connected to the same access node in an overlapping pool area but activate the same multicast service at mobility management entities in different pool areas.

As already mentioned above, in this case the access node in the overlapping pool area may receive multiple session start messages for the same service from different pool areas. The access node may select one and sends an ACK for the selected session start message and NACKs the other ones. Obviously, the mobility management entities receiving a rejection of their multicast session start message are potentially required to perform an update of the service registration during the service transmission later.

Therefore, according to another embodiment of the invention, it might be advantageous to perform the registration update already when receiving the rejection message.

Fig. 11 shows the procedure for registering a mobility management entity at a user plane entity of a pool area other than that of the mobility management entity according to an exemplary embodiment of the invention. In a first step, a mobility management entity M-MME #20 of pool area #2 transmits 1101 a user plane establishment request for a multicast service to an access node eNobeB #2 in the overlapping part of the pool areas #1 and #2. Assuming that the access node has decided to establish the multicast user plane for the service to a user plane entity of pool area #1, it may respond 1102 with a NACK message including information about the selected user plane entity and/or its tracking area/pool area. Receiving the NACK message may in turn trigger the mobility management entity MME #20 to register 1103 at the user plane entity M-UPE #1 in the different pool area.

In combination with the different embodiments described above, the access node in the overlapping area may instantly broadcast extended system information for the multicast service, comprising information about the selected user plane entity and its pool area providing the multicast user plane and which other tracking area/pool area have registered there. Due to this, it might not be required for an idle mode mobile terminal to trigger the update of service registration during an ongoing service, resulting in better utilization of mobile terminal and network resources.

The exemplary embodiments described herein have been mainly focused on a cellular mobile network architecture using specific protocols, like a SAE/LTE system standardized in 3GPP. Accordingly, the mobility management entity may for example correspond the MME of a 3GPP-based SAE/LTE system and the user plane entity may be a UPE providing the user plane for a multicast service, e.g. a MBMS service. Of course, a UPE may not only be responsible for one single multicast service but could for example also provide the user plane for several multicast services and/or other dedicated and/or broadcast services. Similarly, an access node may for example be an eNodeB in the 3GPP-based SAE/LTE system.

However, the aspects of the invention as described in the various embodiments above may also apply to other mobile communications networks utilizing an architecture and protocols as standardized in the IETF (Internet Engineering Task Force).

In particular the invention is related to a system using IP Mobility Support for IPv4 (MIPv4) as standardized in RFC 3344, "Mobility Support for IPv4" (available at http://www.ietf.org and incorporated herein by reference). This RFC introduces several functional entities to IPv4-based networks to enable user mobility. The first is a Mobile Node (MN), which is a host or router that changes its point of attachment from one network or subnetwork to another. Another MIPv4 specific entity is a Home Agent (HA), which may be considered a router on a mobile node's home network which tunnels datagrams for delivery to the mobile node when the mobile node is away from home, and maintains current location information for the mobile node. Finally a Foreign Agent (FA) is introduced in MIPv4, which is a router on a mobile node's visited network which provides routing services to the mobile node while registered.

With respect to above described concepts subject to the different embodiments of the invention, the home agent may be considered to provide similar functions as the core network entities of a 3GPP-based SAE/LTE system. Hence, in one embodiment, the mobility management entity and user plane entity may be considered to be corresponding to a home agent. Accordingly, one embodiment of the invention foresees that a home agent of a mobile terminal in a first network may register for a multicast service at another home agent of another network. Similarly, a pool area or tracking area may thus be similar to the network (identified by a given prefix of the IPv4 addresses defined in the network) served by a home agent or a foreign agent respectively. Obviously, one or more home agents and one or more foreign agents could be present in a single pool area/tracking area.

Further, the foreign agent may be considered to have a function corresponding to same of the access node in the various embodiments described herein. In MIPv4, a care-of address (CoA) denotes the termination point of a tunnel toward a mobile node, for datagrams forwarded to the mobile node while it is away from home. The MIPv4 protocol can use two different types of care-of address, whereas the type of "foreign agent care-of address" using an address of a foreign agent with which the mobile node is registered, is most relevant to this invention.

In accordance with another embodiment of the invention the following scenario may be considered for exemplary purposes. Two or more mobile nodes may request the same multicast service, e.g. may register their home address at the same server providing the multicast service. All mobile nodes may further be considered to be attached to the same (foreign) network and using the same foreign agent. However, at least two mobile nodes may have different home networks (i.e. are served by different home agents).

In this scenario each home agent tunnels the same multicast service to the foreign agent. So the foreign agent receives the same service data multiple times via the different tunnels. As the foreign agent can compare the service data received from different home agents it is able to detect same services. Obviously the data would be needed just once and could be replicated in the foreign agent for transmission to each mobile node. This may allow for saving resources in the network between the foreign agent and the home agents. Therefore, an optimization might be that the foreign agent just uses one tunnel to one of the home agent and terminates the other ones.

In case the mobile node to which the remaining tunnel is associated is leaving the service, e.g. because service reception is terminated at the mobile node or the mobile node moves to another network, the tunnel between the foreign agent and the home agent is terminated. This would result in loss of service for the other mobile nodes that activated the same multicast service. In order to overcome this problem, one embodiment of the invention proposes that a foreign agent applying the described optimization for multicast services could indicate information about the selected tunnel and respectively the selected home agent to the connected mobile nodes, e.g. by including this information into its agent advertisements. In case a mobile node receives this indication, it could trigger its home agent to notify or register at the other home agent. This way the tunnel could be kept even if the respective mobile node is no longer present and service continuity is achieved for the other mobile nodes.

In most embodiments described herein reference to pool areas and tracking areas has been frequently made. In this respect it should be further noted that mobile communications systems typically support different states for the mobile terminals usually called active and idle. During the active state, the mobile terminals maintain active communication channels with the network and are able to receive and transmit data. However, the maintenance of these communication channels usually consumes a lot of scarce battery resources, even in cases the mobile terminal do not have any data for reception or transmission. In order to avoid this unnecessary drain of battery power from the mobile terminals in such cases, the mobile terminals may transit to the idle state. In this state the mobile terminal is typically still registered in the mobile network, but does not actively maintain communication channels. In order to transmit or receive data it has to transit to the active state first. In contrast to the active state, the terminal's location may not be specifically known in the idle state. So in case the network receives some data for transmission to the mobile terminal it has to locate it in the first place and command it to transit to the active state. This procedure is typically called paging.

Of course it is possible for the mobile terminal to move while being in the idle state. As the network does not know the location of the terminal, the paging has to be performed in the entire network in the worst case. In order to limit this signaling effort mobile communications networks typically configure some administrative areas often called tracking area (TA). Mobile terminals in the idle state are known on this tracking area level. In case they move out of such an area, they would notify this to the network, e.g. using a location update procedure.

In a 3GPP SAE/LTE system the entity that controls roaming activities of a mobile terminal across tracking areas within a pool area and across pool areas is the mobility management entity. Moreover, one mobility management entity pool is expected to require mapping information between tracking area IDs and cells in this tracking area for a particular geographical area. In other words, a pool area might comprise one or more tracking areas, but a mobility management entity may know which tracking areas belong to its own pool area. Therefore, it can derive whether a multicast service is provided in another pool area from tracking area information.

Accordingly, in another embodiment of the invention, all procedures where the mobility management entity has been informed on a pool area may also utilize information on a particular tracking area, as this information may be sufficient for the mobility management entity to identify network entities (such as a user plane entity for multicast services) in another pool area. Accordingly, in those procedures information on the tracking area may be provided to the mobility management entity instead of information on the pool area.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A method for ensuring service continuity of a multicast service received by a mobile terminal from an access node, wherein the access node is assigned to a first and at least a second pool area simultaneously and wherein the mobile terminal is served by a mobility management entity of the first pool area, the method comprising the step of:
registering the mobility management entity of the first pool area for the multicast service at a user plane entity of the second pool area, if the access node serving the mobile terminal uses a user plane to the user plane entity of the second pool area.

2. The method according to claim 1, further comprising the step of transmitting multicast service information on at least the multicast service from the access node to at least the mobile terminal served by the mobility management entity of the first pool area, wherein the multicast service information indicates the pool area of the user plane entity to which the user plane for the multicast service has been established or an identifier of the user plane entity to which the user plane for the multicast service has been established.

3. The method according to claims 1 or 2, wherein the mobility management entity of the first pool area registers for the multicast service at the user plane entity of the second pool area in response to receiving a notification from the mobile terminal that the user plane for the multicast service has been established to the user plane entity of the second pool area.

4. The method according to claim 3, wherein the notification is transmitted in response to detecting by the mobile terminal that the user plane entity to which the user plane of the multicast service is established is assigned to a different pool area than the mobility management entity of the first pool area serving the mobile terminal.

5. The method according to claim 4, wherein the detection is based on the multicast service information received by the mobile terminal from the access node.

6. The method according to one of claims 3 to 5, wherein the notification is transmitted by the mobile terminal once upon detecting that the user plane entity to which the user plane of the multicast service has been established belongs to a pool area different to that of the mobility management entity of the first pool area serving the mobile terminal.

7. The method according to claim 2, wherein the multicast service information on at least the multicast service further indicates pool areas of mobility management entities having registered at the user plane entity of the pool area to which the user plane for the multicast service has been established.

8. The method according to claim 7, further comprising the step of transmitting a notification from the mobile terminal indicating to the mobility management entity of the first pool area to register at the user plane entity of the second pool area, if the multicast service information does not indicate that a mobility management entity of the first pool area has registered at the user plane entity of the second pool area.

9. The method according to one of claims 1 to 8, further comprising the step of deciding by the access node whether to establish or use a user plane to a user plane entity of the first pool area or the user plane entity of the second pool area.

10. The method according to claim 9, wherein the access node decides to use the user plane to the user plane entity of the second pool area, if the user plane to the user plane entity of the second pool area is already established upon receiving a request to establish a user plane for the multicast service from the mobility management entity of the first pool area.

11. The method according to claim 9, wherein the access node decides whether to establish or use the user plane to a user plane entity of the first pool area or the user plane entity of the second pool area upon receiving a respective request to establish a user plane for the multicast service from the mobility management entity of the first pool area and a mobility management entity of the second pool area serving at least one other mobile terminal requesting the multicast service through the access node.

12. Them method according to one of claims 9 to 11, wherein the access node detects that requests to establish a user plane for a multicast service are related to the same multicast service based on an identifier of a respective multicast service.

13. The method according to one of claims 1 to 12, further comprising the step of establishing the user plane to the user plane entity of the second pool area for receiving the multicast service data at the access node and for forwarding same to mobile terminals registered to the multicast service within the service area of the access node.

14. The method according to one of claims 1 to 13, wherein the mobility management entity of the first pool area registers itself at the user plane entity of the second pool area in response to receiving a notification from the access node that the user plane to the user plane entity of the second pool area is to be used for the multicast service data.

15. The method according to claim 14, wherein the notification includes an indication of the user plane entity of the second pool area or identifies the second pool area.

16. The method according to claim 14 or 15, wherein the mobile terminal served by the mobility management entity of the first pool area is in active mode.

17. The method according to one of claims 14 to 16, wherein mobile terminals potentially receiving the multicast service through the access node are in idle mode and the method comprises the further step of determining by the access node whether there is at least one mobile terminal to receive the multicast service in its service area, and
wherein the notification is only transmitted by the access node, if there is at least one at least one mobile terminal to receive the multicast service in its service area.

18. The method according to one of claims 1 to 17, further comprising the steps of:
transmitting from a mobility management entity of the second pool area a multicast service deregistration to the user plane entity of the second pool area,
receiving in response to the deregistration a confirmation message at the mobility management entity from the user plane entity of the second pool area, wherein the confirmation message indicates whether at least one other mobility management entity has registered for the multicast service at the user plane entity of the second pool area, and
if the confirmation message indicates that another mobility management entity of the first pool area but no other mobility management entity of the second pool area is still registered for the multicast service at the user plane entity of the second pool area, transmitting by the mobility management entity having transmitted the deregistration a user plane release notification to a respective access node of the second pool area except for those access nodes assigned to the first and second pool area simultaneously.

19. The method according to claim 18, further comprising the step of transmitting by the mobility management entity having transmitted the multicast service deregistration a user plane release notification to a respective access node of the second pool area, if the confirmation message indicates that no other mobility management entity has registered for the multicast service at the user plane entity of the second pool area.

20. The method according to one of claims 1 to 17, further comprising the steps of:
transmitting from a mobility management entity of the first pool area a multicast service deregistration to the user plane entity of the second pool area,
receiving in response to the deregistration a confirmation message at the mobility management entity from the user plane entity of the second pool area, wherein the confirmation message indicates whether at least one other mobility management entity has registered for the multicast service at the user plane entity of the second pool area, and
if no other mobility management entity has registered for the multicast service at the user plane entity of the second pool area, transmitting by the mobility management entity a multicast service registration status request to a user plane entity of the first pool area for requesting the user plane entity of the first pool area to indicate whether at least one other mobility management entity has registered for the multicast service at the user plane entity of the first pool area,
if a response from the user plane entity of the first pool received at the mobility management entity of the first pool area in response to the multicast service registration status request indicates that another mobility management entity of the first pool area is still registered for the multicast service at the user plane entity of the first pool area, transmitting by the mobility management entity having transmitted the deregistration a user plane release notification to a respective access node assigned to the first and second pool area simultaneously.

21. The method according to claim 20, further comprising the step of transmitting by the mobility management entity having transmitted the multicast service deregistration a user plane release notification to a respective access node of the first pool area, if the response from the user plane entity of the first pool indicates that no other mobility management entity of the first pool area is still registered for the multicast service at the user plane entity of the first pool area.

22. The method according to one of claims 18 to 21, wherein the user plane release notification comprises an identifier of the multicast service.

23. The method according to one of claims 18 to 22, further comprising the step of releasing by an access node the user plane to the user plane entity of the second pool area in response to receiving the user plane release notification.

24. The method according to one of claims 1 to 17, further comprising the steps of:
transmitting from a mobility management entity of the second pool area a multicast service deregistration to the user plane entity of the second pool area,
receiving in response to the deregistration a confirmation message from the user plane entity of the second pool area at the mobility management entity, wherein the confirmation message indicates that one or more mobility management entities of the first pool area are still registered for the multicast service at the user plane entity of the second pool area, and
notifying by the mobility management entity having transmitted the multicast service deregistration those access nodes being assigned to the first and second pool area simultaneously to release the user plane to the user plane entity of the second pool area upon having established a new user plane to a user plane entity of the first pool area.

25. The method according to claim 24, further comprising indicating to a mobility management entity of the first pool area by the mobility management entity having transmitted the multicast service deregistration to trigger establishment of a user plane for the multicast service between the those access nodes being assigned to the first and second pool area simultaneously and a user plane entity of the first pool area.

26. The method according to claim 24 or 25, further comprising requesting, by the mobility management entity having transmitted the multicast service deregistration, one or more mobility management entities of the first pool area having registered for the multicast service at the user plane entity of the second pool area to register for the multicast service at the user plane entity of the first pool area.

27. The method according to one of claims 24 to 26, further comprising the step of transmitting by the mobility management entity having transmitted the deregistration a user plane release notification to a respective access node of the second pool area except for access nodes assigned to the first and the second pool area simultaneously.

28. The method according to one of claims 1 to 27, further comprising the steps of:
transmitting by a source access node of the first pool area a handover request message to the access node being assigned to the first and second pool area simultaneously, wherein the handover request message comprises mobile terminal related context information on a multicast service of a mobile terminal to be handed over from the source access node to the access node being assigned to the first and second pool area simultaneously,
determining by the access node receiving the handover request message whether a user plane for the multicast service to the user plane entity of the first or the second pool area is used based on the context information, and
if the user plane for the multicast service to the user plane entity of the second pool area is used, triggering the mobility management entity of the first pool area serving the mobile terminal in handover to register for the multicast service at the user plane entity of the second pool area.

29. The method according to one of claims 1 to 27, further comprising the steps of:
determining by the access node upon handover of the mobile terminal to the access node, whether a user plane for the multicast service to the user plane entity of the first or the second pool area is used, wherein the determination is based on context information comprising information on a multicast service received by the mobile terminal to be handed over to the access node being assigned to the first and second pool area simultaneously, and
if the user plane for the multicast service to the user plane entity of the second pool area is used, transmitting a handover complete message from the access node to the mobility management entity of the first pool area, wherein the handover complete message triggers the mobility management entity of the first pool area to register for the multicast service at the user plane entity of the second pool area.

30. A mobility management entity of a first pool area serving a mobile terminal to receive a multicast service, the mobility management entity comprising:
a transmitter for registering the mobility management entity for the multicast service at a user plane entity of a second, other pool area, if an access node serving the mobile terminal uses a user plane to the user plane entity of the second pool area.

31. The mobility management entity according to claim 30, wherein the mobility management entity further comprises a receiver for receiving a notification from the mobile terminal or the access node that the user plane for the multicast service has been established to the user plane entity of the second pool area, and wherein the mobility management entity is adapted to register for the multicast service at the user plane entity of the second pool area in response to the reception of the notification.

32. The mobility management entity according to claim 31, wherein the notification comprises an identifier of the user plane entity of the second pool area or an indication of the second pool area.

33. The mobility management entity according to claim 32, further comprising a processing unit for resolving an identifier of the user plane entity of the second pool area based on the indication of the second pool area.

34. A mobility management entity located in a first pool area serving a mobile terminal to receive a multicast service, the mobility management entity comprising:
a transmitter for transmitting a multicast service deregistration to a user plane entity of the first pool area,
a receiver for receiving in response to the deregistration a confirmation message from the user plane entity of the first pool area, wherein the confirmation message indicates whether at least one other mobility management entity has registered for the multicast service at the user plane entity of the first pool area, and
wherein the transmitter is adapted to transmit a user plane release notification to a respective access node of the first pool area except for those access nodes assigned to the first and second pool area simultaneously, if the confirmation message indicates that another mobility management entity of the second pool area but no other mobility management entity of the first pool area is still registered for the multicast service at the user plane entity of the first pool area.

35. The mobility management entity according to claim 34, wherein the transmitter is adapted to transmit a user plane release notification to a respective access node of the first pool area, if the confirmation message indicates that no other mobility management entity has registered for the multicast service at the user plane entity of the first pool area.

36. A mobility management entity located in a first pool area serving a mobile terminal to receive a multicast service, the mobility management entity comprising:
a transmitter for transmitting a multicast service deregistration to a user plane entity of the second pool area,
a receiver for receiving in response to the deregistration a confirmation message from the user plane entity of the second pool area, wherein the confirmation message indicates whether at least one other mobility management entity has registered for the multicast service at the user plane entity of the second pool area, and
wherein the transmitter is adapted to transmit a multicast service registration status request to a user plane entity of the first pool area for requesting the user plane entity of the first pool area to indicate whether at least one other mobility management entity has registered for the multicast service at the user plane entity of the first pool area, if no other mobility management entity has registered for the multicast service at the user plane entity of the second pool area and
wherein the transmitter is further adapted to transmit a user plane release notification to a respective access node assigned to the first and second pool area simultaneously, if a response from the user plane entity of the first pool received in response to the multicast service registration status request indicates that another mobility management entity of the first pool area is still registered for the multicast service at the user plane entity of the first pool area.

37. The mobility management entity according to claim 36, the transmitter is adapted to transmit a user plane release notification to a respective access node of the first pool area, if the response from the user plane entity of the first pool indicates that no other mobility management entity of the first pool area is still registered for the multicast service at the user plane entity of the first pool area.

38. A mobility management entity serving a mobile terminal to receive a multicast service, the mobility management entity comprising:
a transmitter for transmitting a multicast service deregistration to a user plane entity of a first pool area,
a receiver for receiving a confirmation message from the user plane entity of the first pool area in response to the deregistration, wherein the confirmation message indicates that one or more other mobility management entities of a second pool area are still registered for the multicast service at the user plane entity of the first pool area, and
wherein the mobility management entity is adapted to notify those access nodes being assigned to the first and a second, other pool area simultaneously to release the user plane to the user plane entity of the first pool area upon having established a user plane to a user plane entity of the second pool area.

39. The mobility management entity according to claim 38, wherein the mobility management entity is adapted to trigger a mobility management entity of the second pool area to establish a user plane for the multicast service between the those access nodes being assigned to the first and the second pool area simultaneously and the user plane entity of the second pool area.

40. The mobility management according to claim 38 or 39, wherein the mobility management entity is adapted to trigger the one or more mobility management entities of the second pool area having registered for the multicast service at the user plane entity of the first pool area to register for the multicast service at the user plane entity of the second pool area.

41. The mobility management entity according to one of claims 38 to 40, wherein the transmitter is adapted to transmit a user plane a release notification to a respective access node of the first pool area except for access nodes assigned to the first and the second pool area simultaneously.

42. The mobility management entity according to one of claims 30 to 41, wherein the mobility management entity further comprises means to perform or to participate in the steps of the method according to one of claims 1 to 29.

43. A mobile terminal for receiving a multicast service through an access node, the mobile terminal comprising:
a receiver for receiving from the access node multicast service information on at least the multicast service, wherein the multicast service information indicates a pool area of a user plane entity to which a user plane for the multicast service has been established or an identifier of a user plane entity to which the user plane for the multicast service has been established, and
a transmitter for transmitting a notification to the mobility management entity serving the mobile terminal triggering a registration of the mobility management entity at the user plane entity to which the user plane for the multicast service has been established.

44. The mobile terminal according to claim 43, wherein the transmitter is adapted to transmit the notification in response to detecting that the user plane entity to which the user plane of the multicast service has been established is assigned to a different pool area than the mobility management entity serving the mobile terminal.

45. The mobile terminal according to claim 44, wherein the detection is based on the multicast service information.

46. The mobile terminal according to one of claims 43 to 45, wherein the transmitter is adapted to transmit the notification once upon detecting that the user plane entity to which the user plane of the multicast service has been established is assigned to a different pool area than the mobility management entity serving the mobile terminal.

47. The mobile terminal according to claim 43, wherein the multicast service information further indicates pool areas of mobility management entities having registered at the user plane entity of the pool area to which the user plane for the multicast service has been established.

48. The mobile terminal according to claim 47, wherein the transmitter is adapted to transmit the notification, if the multicast service information received by the mobile terminal from the access node does not indicate that a mobility management entity of the first pool area serving the mobile terminal has registered at a user plane entity of a second pool area.

49. The mobile terminal according to one of claims 43 to 48, wherein the mobile terminal further comprises means to perform or to participate in the steps of the method according to one of claims 1 to 29.

50. An access node assigned to a first and a second pool area, the access node comprising:
a transmitter for transmitting multicast service information on at least the multicast service to at least one mobile terminal to receive the multicast service, wherein the multicast service information indicates a pool area of a user plane entity to which a user plane for the multicast service has been established or an identifier of a user plane entity to which the user plane for the multicast service has been established.

51. The access node according to claim 50, wherein the multicast service information further indicates pool areas of mobility management entities having registered at the user plane entity of the pool area to which the user plane for the multicast service has been established.

52. The access node according to claims 50 or 51, further comprising:
a receiver for receiving a notification from a mobility management entity, wherein the notification indicates to the access node that the mobility management entity has registered for the multicast service at the user plane entity to which the user plane for the multicast service has been established and
a processing unit for updating the multicast service information in response to the notification.

53. The access node according to one of claims 50 to 52, further comprising a processing unit for deciding whether to establish or use a user plane for the multicast service to a user plane entity of a first pool area or the user plane entity of the a second pool area.

54. The access node according to claim 53, wherein the access node is adapted to detect that requests for establishment of a user plane for a multicast service received by a receiver of the access node are related to the same multicast service based on an identifier of a respective multicast service.

55. An access node assigned to a first and a second pool area, the access node comprising:
a receiver for receiving a request for establishment of a user plane for a multicast service to the first pool area from a mobility management entity of the first pool area, and
a transmitter for transmitting notification to the mobility management entity of the first pool, to trigger the registration of the mobility management entity of the first pool area at a user plane entity of the second pool area to which the user plane for the multicast service has been established.

56. The access node according to claim 55, wherein the notification includes an identifier of the user plane entity of the second pool area or an identification of the second pool area

57. The access node according to one of claims 50 to 56, wherein the access node further comprises means to perform or to participate in the steps of the method according to one of claims 1 to 29.

58. A communication system comprising a mobility management entity according to one of claims 30 to 42 and/or mobile terminal according to one of claims 43 to 49 and/or an access node according to one of claims 50 to 57.
